# EUROPÄISCHE PATENTSCHRIFT

(11) **EP 1 649 249 B1**
(45) Veröffentlichungstag und Bekanntmachung des Hinweises auf die Patenterteilung: **24.10.2012**
(21) Anmeldenummer: 04763440.7
(22) Anmeldetag: 23.07.2004
(51) Int. Cl.: G01C 25/00, G01C 1/02

(54) **VORRICHTUNG ZUM PRÜFEN ODER KALIBRIEREN DER WINKELABHÄNGIGEN AUSRICHTUNG EINES HOCHPRÄZISEN PRÜFLINGS**
METHOD FOR CHECKING OR CALIBRATING THE ANGLE-DEPENDENT ALIGNMENT OF A HIGH-PRECISION TEST-PIECE
DISPOSITIF POUR VERIFICATION OU ETALONNER L'ALIGNEMENT DEPENDANT DE SA POSITION ANGULAIRE D'UNE EPROUVETTE DE HAUTE PRECISION

(30) Priorität: 28.07.2003 EP 03017032
(43) Veröffentlichungstag der Anmeldung: 26.04.2006
(73) Patentinhaber: Leica Geosystems AG, 9435 Heerbrugg (CH)
(72) Erfinder: LIPPUNER, Heinz, CH-9445 Rebstein (CH)
(74) Vertreter: Kaminski Harmann
(86) Internationale Anmeldenummer: PCT/EP2004/008262
(87) Internationale Veröffentlichungsnummer: WO 2005/012839

(56) Entgegenhaltungen:
- US-A- 3 874 087
- DATABASE WPI Section EI, Week 198122 Derwent Publications Ltd., London, GB; Class S02, AN 1981-F0467D XP002304658 & SU 763 682 B (GEOD AERIAL SURVY) 16. September 1980 (1980-09-16) in der Anmeldung erwähnt & SU 763 682 A (TSNII GEODEZII) 15. September 1980 (1980-09-15)
- JARVIS J F ED - INSTITUTE OF ELECTRICAL AND ELECTRONICS ENGINEERS: "CALIBRATION OF THEODOLITES" PROCEEDINGS OF THE INTERNATIONAL CONFERENCE ON ROBOTICS AND AUTOMATION. PHILADELPHIA, APR. 24 - 29, 1988, WASHINGTON, IEEE COMP. SOC. PRESS, US, Bd. VOL. 2, 24. April 1988 (1988-04-24), Seiten 952-954, XP001013825 ISBN: 0-8186-0852-8

## Beschreibung

Die Erfindung betrifft eine Vorrichtung zum Prüfen oder Kalibrieren der winkelabhängigen Ausrichtung eines hochpräzisen Prüflings.

Zum Prüfen oder Kalibrieren von Hochpräzisionsteilen, die entweder zur hochgenauen Messung, Überprüfung oder Vorgabe von Winkeln mit einer Präzision bis unter 0,5" bzw. 0,15 mgon dienen, oder allgemein hochgenaue Winkelausrichtungen erfordern, werden höchstpräzise Prüf- oder Kalibriervorrichtungen benötigt, deren Genauigkeit noch höher liegen muss als die der zu prüfenden oder kalibrierenden hochpräzisen Prüflinge.

Insbesondere zum Prüfen oder Kalibrieren eines Theodolits, bei dem ein Horizontal- und ein Vertikalwinkel durch - beispielsweise statische oder dynamische - Winkelabgriffe bestimmt werden, sind unterschiedliche Vorrichtungen und Verfahren aus dem Stand der Technik bekannt.

Bei einem klassischen, seit längerem bekannten Theodoliten-Winkelabgriffsprüfverfahren wird von einem fixen Standpunkt aus manuell mit dem Theodolit-Fernrohr auf mehrere feststehende, um den Standpunkt verteilte Kollimatoren gezielt. Dabei wird die Konstanz der Winkeldifferenzen, gemessen an verschiedenen Kreisstellen des Prüflings, als Mass für die horizontale Winkelmessgenauigkeit verwendet. Für die vertikale Messgenauigkeit werden die Kollimatorwinkeldifferenzen mit den Sollwerten verglichen. Teilkreisprüfgeräte zur Durchführung eines derartigen Teilkreisprüfverfahrens sind bekannt (z.B. Geräte PRUTE und PRUFO der Fa. F.W. Breithaupt & Sohn). Derartige Verfahren entsprechen im Wesentlichen dem Prüfverfahren nach ISO - Norm 17123-3 (Optics and optical instruments - Field procedures for testing geodetic and surveying instruments), jedoch wird dort nicht auf Kollimatoren, sondern auf fixe Ziele gezielt. Nachteile dieser Theodoliten-Winkelabgriffsprüfverfahren sind unter anderem, dass eine vollständige Automatisierung des Messvorgangs nur bedingt möglich ist, die Anzahl der möglichen unterschiedlichen Messungen auf die Anzahl der anzielbaren Kollimatoren beschränkt ist und das Messergebnis stark vom Beobachter abhängt.

Eine Alternative zu den vorgenannten Verfahren stellt das interferometrische Prüfverfahren von Maurer (Maurer, W.: Ein interferometrisches Verfahren zur Bestimmung von Strichverbesserungen an eingebauten Theodolitenkreisen; Dissertation München, 1983; Deumlich, F. & Staiger, R.: Instrumentenkunde der Vermessungstechnik) dar. Bei diesem Verfahren wird der Winkel, um den der zu prüfende Theodolit gedreht wird, aus der Wegdifferenz eines Laserstrahls zu Interferometerreflektoren abgeleitet. Der maximale interferometrisch messbare Winkel beträgt +/- 8,5 gon, die Auflösung wird mit 0,01 mgon angegeben. Mit dem interferometrischen Verfahren ist lediglich eine Prüfung von Horizontalwinkeln möglich. Für die Prüfung von Vertikalwinkeln ist dieses Verfahren ungeeignet, da eine Prismenhalterung verdrehbar mit der Kippachse des Theodolits verbunden werden müsste, wodurch eine Beeinflussung des Vertikalwinkelabgriffs und der Kippachse aufgrund des zusätzlichen Gewichts der Prismenhalterung nicht auszuschliessen wäre.

Prüfverfahren zur Prüfung eines ausgebauten Teilkreises, beispielsweise eines Theodolits, sind aus dem Stand der Technik bekannt. Bei diesen Verfahren handelt es sich vornehmlich um Komparierverfahren, bei denen der zu prüfende Winkelabgriff am Teilkreis mit einem entsprechend genauen Winkelnormal, beispielsweise interferometrisch oder mittels eines Präzisionsteilkreises, verglichen wird. Unterschiedliche Vorrichtungen dieser Art, die beispielsweise in der Physikalischen Technischen Bundesanstalt (Prowe, B.: Untersuchungen an einem neuen Teilkreisprüfgerät; Feinwerktechnik & Messtechnik, Heft 5, 1985, S. 213-217) oder am Zentralinstitut für Physik der Erde (Weise, H. & Quart, W.: Eine vollautomatische Messanlage zur Prüfung von Kreisteilungen; Feingerätetechnik, Heft 4, 1975, S. 155-160) eingesetzt werden, oder weitere Vorrichtungen zur Prüfung von Teilkreisteilungen, z.B. aus CH 372847 oder CH 372471, sind aus dem Stand der Technik bekannt. Bei diesen Verfahren und Vorrichtungen ist jedoch keine Winkelabgriffsprüfung eines fertig montierten Theodolits sondern lediglich die Prüfung eines ausgebauten Teilkreises möglich. Ausserdem sei auf die ISO - Norm 17123-3 (Optics and optical instruments - Field procedures for testing geodetic and surveying instruments) oder die DIN 18723, Teil 3 (Feldverfahren zur Genauigkeitsuntersuchung geodätischer Instrumente) verwiesen.

Eine Vorrichtung und eine Verfahren zum vollautomatischen Prüfen und Kalibrieren eines Theodolits, eines Tachymeters oder einer Totalstation, im Folgenden mit dem Begriff "Theodolit" zusammengefasst, ist aus dem Stand der Technik bekannt. Diese so genannte "Theodolitenprüfmaschine" wird beispielsweise detailliert in dem Beitrag "TPM - Ein neues Gerät zur vollautomatischen Prüfung von Teilkreisen in elektronischen Theodoliten" von Hilmar Ingensand zum X. Internationalen Kurs für Ingenieurvermessung an der Technischen Universität München vom 12.-17.9.1988 und in der Diplomarbeit "Kalibriereinrichtung für Theodoliten" von Andreas Rützler, ausgeführt am Institut für allgemeine Elektrotechnik und elektrische Messtechnik der Technischen Universität Graz im Oktober 1991, beschreiben. Die Theodolitenprüfmaschine weist eine Genauigkeit von etwa 0,1 mgon auf und dient beispielsweise zur Prüfung von elektronischen Theodoliten mit einem codierten Teilkreisabgriffsystem, das ohne die sonst bei Inkrementalverfahren notwendige Initialisierung sofort einen Winkel ausgibt, jedoch anstatt einer diametralen Teilkreisabtastung nur einen einzigen Winkelabgriff aufweist. Der hierbei entstehende Fehler durch die mechanische Exzentrizität des Teilkreises ist spezifisch für jeden Theodolit und kann nach Messung mit der Theodolitenprüfmaschine im elektronischen Theodolit gespeichert und automatisch korrigiert werden. Die Theodolitenprüfmaschine ermöglicht einen vollautomatischen Prüfablauf, die Prüfung von Horizontal- und Vertikal-Winkelabgriff en in Gebrauchslage im eingebauten Zustand, die Prüfung über einen Grossteil des nutzbaren Messbereichs des Theodoliten, die Analyse der im Prüfvorgang festgestellten systematischen Fehler und die automatische Bestimmung einer Korrekturfunktion, die im Theodolit abgespeichert wird. Die Theodolitenprüfmaschine ist für unterschiedliche Theodolitenbaureihen geeignet.

Im Folgenden wird diese aus dem Stand der Technik bekannte Theodolitenprüfmaschine unter Zuhilfenahme von Figuren genauer beschrieben. Es zeigen
- Fig. 1: das Komparatorkonzept der aus dem Stand der Technik bekannten Theodölitenprüfmaschine; und
- Fig. 2: den Vorrichtungsaufbau der aus dem Stand der Technik bekannten Theodolitenprüfmaschine.

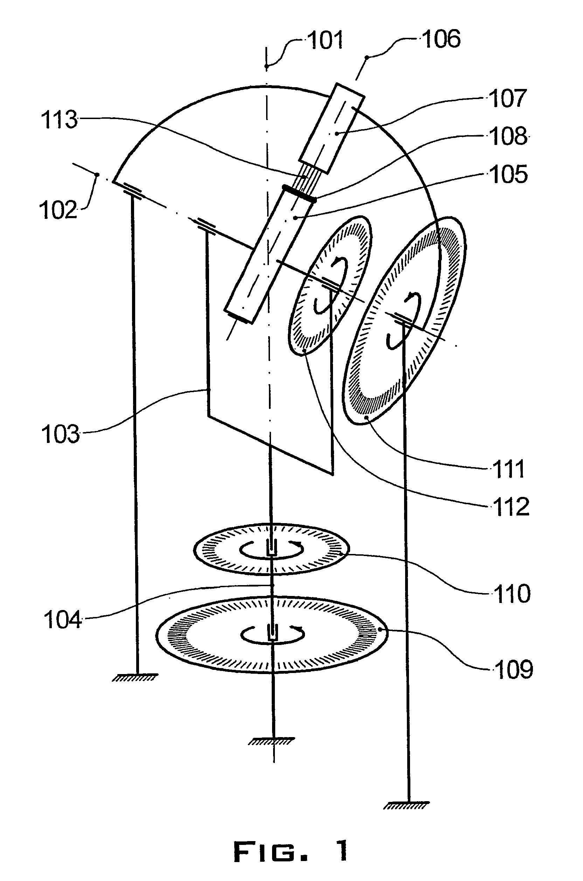

Die bekannte Theodolitenprüfmaschine, die auf dem in Fig. 1 dargestellten Komparatorkonzept basiert, verfolgt den Gedanken eines "Theodolits im Theodolit". Das Achssystem der Theodolitenprüfmaschine entspricht somit geometrisch dem des zu prüfenden Theodolits, so dass ein im Wesentlichen gemeinsames Achssystem mit einer Vertikalachse 101 und einer Horizontalachse 102 entsteht. Der Theodolit ist symbolhaft in Form einer Alhidade 103, die um die Vertikalachse 101 gegenüber einem Unterteil 104 des Theodolits drehbar ist, und eines um die Horizontalachse 102 kippbaren Fernrohrs 105 mit einer Zielachse 106 dargestellt. Da eine absolute Zentrierung der Achssysteme des zu prüfenden Theodolits und der Theodolitenprüfmaschine ausgeschlossen ist, werden die Winkelmesssysteme, das Normal der Theodolitenprüfmaschine und der Winkelabgriff des Theodolits über Autokollimation mittels eines um die Horizontalachse 102 schwenkbaren Autoköllimators 107 gekoppelt. Die Kopplung erfolgt mittels eines kollimierten Strahlenbündels 113 über einen auf dem Fernrohr 105 fixierten planen Aufsatzspiegel 108. Da die Theodolitenprüfmaschine sowie der Theodolit die Rechtwinkelbedingung der Achsen (101, 102, 106) erfüllt, sind alle Achssysteme in der Autokollimationseinstellung kollinear. Bedingt durch den Aufbau von Theodoliten ist der Ablauf der Horizontal- und Vertikalprüfung unterschiedlich. Bei der Horizontalprüfung bleibt die Alhidade 103 des zu prüfenden Theodolits weitgehend fixiert und das Unterteil 104, das mechanisch mit der Winkelnormal verbunden ist, wird um die Vertikalachse 101 gedreht. Nach einer Grobeinstellung des Prüfwinkels durch Drehen des Unterteils 104 des Theodolits gegenüber der weitgehend unbewegten Alhidade 103 erfolgt ein Feineinstellen des Prüfwinkels über Autokollimation, indem das Unterteil 104 und die Alhidade 103 gemeinsam hochpräzise gedreht werden und gegebenenfalls der Autokollimator 107 geringfügig geschwenkt wird, wodurch der Theodolit und das Normal in Referenz gebracht werden. Die Horizontalpositionen werden durch einen höchstpräzisen Horizontalabgriff 109 der Theodolitenprüfmaschine und einen Horizontalabgriff 110 des Theodolits erfasst und verglichen. Die Vertikalprüfung erfolgt, indem der Autokollimator 107 in der gemeinsamen Vertikalebene um die Horizontalachse 102 und somit um den zu prüfenden Theodoliten geschwenkt wird. Dabei wird das Fernrohr 105 des Theodolits um den vorgegebenen Winkel grob mitgedreht. Nach der anschliessenden Autokollimationseinstellung werden die Vertikalposition des Autokollimators 107 durch einen höchstpräzisen Vertikalabgriff 111 der Theodolitenprüfmaschine und die Vertikalposition des Fernrohrs 105 durch einen Vertikalabgriff 112 des Theodolits erfasst und verglichen.

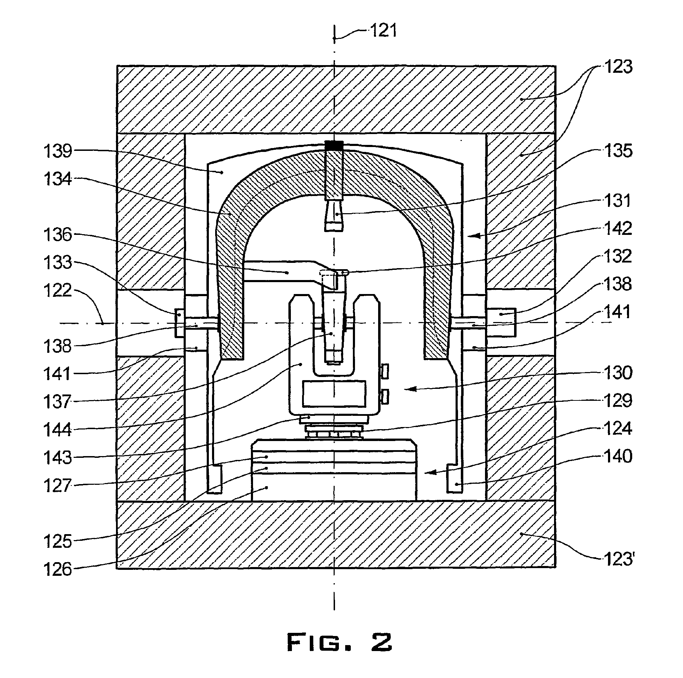

Fig. 2 zeigt den Vorrichtungsaufbau der bekannten Theodolitenprüfmaschine mit einer Vertikalachse 121 und einer Horizontalachse 122. Der Aufbau ist bezüglich der Stabilitätsanforderungen im µ-Bereich dem einer 3-D Koordinatenmessmaschine gleichzusetzen, weshalb als Aufnahme der Achssysteme ein Granitrahmen 123 verwendet wird. Die gesamte Maschine ruht auf einem Betonfundament (nicht dargestellt) und ist in einem klimatisierten Raum aufgestellt. Auf einer Grundplatte 123' des Granitrahmens 123 ist ein einem Präzisionsdrehtisch ähnliches Horizontalmessteil 124, das über Wälzlager 125 gelagert und mittels eines Horizontalantriebs 126 um die Vertikalachse 121 drehbar ist, befestigt. Das Horizontalmessteil 124 besitzt ausserdem einen Horizontalwinkelsensor 127. Auf dem Horizontalmessteil 124 ist ein Dreifuss 129 zur Aufnahme eines zu prüfenden Theodolits 130 montiert. Die elektrische Verbindung für den aufgesetzten Theodolit 130 erfolgt über ein Schleifringsystem (nicht dargestellt). Ein Vertikalmessteil 131 weist eine um die Horizontalachse 122 schwenkbare, über einen Vertikalantrieb 132 antreibbare, einen Vertikalwinkelsensor 133 aufweisende Messbrücke 134 auf, die einen elektronischen Autokollimator 135 trägt. An der Messbrücke 134 ist ausserdem ein gabelförmiger Mitnehmer 136 angeordnet, der als Anschlag für ein Fernrohr 137 des Theodolits 130 dient. Somit folgt die vertikale Position des Fernrohres 137 weitgehend der des Autokollimators 135. Da der Mitnehmer 136 jedoch ein Spiel gegenüber dem Fernrohr 137 aufweist, sind der Mitnehmer 136 und das Fernrohr 137 bei Feinverstellung der Messbrücke 134 entkoppelt. In gleicher Weise dient der Mitnehmer 136 als Anschlag bei horizontaler Verstellung über das Horizontalmessteil 124. Die Stabilität der schweren Messbrücke 134 ist kritisch, da besonders in horizontaler Position hohe, die Messung eventuell verfälschende Biegemomente auf die Struktur der Messbrücke 134 wirken. Die U-förmige Messbrücke 134 ist beidseitig am Granitrahmen 123 über als vorgespannte Kugelbuchsenlager ausgebildete Kippachslager 138 um die Horizontalachse 122 drehbar gelagert. Um diese Kippachslager 138 von radialen Kräften durch das über 12 kg betragende Eigengewicht der Messbrücke 134 und des elektronischen Autokollimators 135 zu entlasten, verfügt die Maschine über ein zusätzliches Gewichtskompensationssystem. Die gesamte Messbrücke 134 wird von einem äusseren Tragrahmen 139, der zugleich auch Gegengewichte 140 trägt und die Antriebskräfte aufnimmt, im Schwerpunkt unterstützt. Dieser Tragrahmen 139 dreht sich in eigenen separaten Tragrahmenlagern 141. Die Autokollimationseinstellung erfolgt, indem der Autokollimator 135 der Theodolitenprüfmaschine einen kollimierten Lichtstrahl auf einen planen Aufsatzspiegel 142 projiziert, der auf dem Fernrohr 137 des Theodolits 130 normal zur Richtung der Zielachse des Fernrohrs 137 aufgesetzt ist. Die Befestigung des Aufsatzspiegels 142 auf dem Fernrohr 137 erfolgt durch eine Spannzange (nicht dargestellt). Damit ist es möglich, den Aufsatzspiegel 142 weitgehend normal zur optischen Achse des Fernrohrs 137 und somit zur Zielachse zu montieren. Der Aufsatzspiegel 142 reflektiert den kollimierten Lichtstrahl in den Autokollimator 135 der Theodolitenprüfmaschine zurück. Der Lichtstrahl trifft im Brennpunkt des Autokollimators 135 auf einen Positionsdetektor (nicht dargestellt), der als eine Quadrantendiode ausgebildet ist, und erzeugt dort einen Lichtfleck. Die Auflösung des Autokollimators 135 beträgt etwa 0,01 mgon. Durch den Horizontalantrieb 126 und den Vertikalantrieb 132, die pulsbreitenmoduliert angesteuerbare 15 V DC Motoren besitzen, wird das Horizontalmessteil 124 mit dem Theodoliten 130 bzw. die Messbrücke 134 mit dem Autokollimator 135 präzise bewegt, bis sich der Lichtfleck in der Mitte des Positionsdetektors des Autokollimators 135 befindet. Zusätzlich ermöglicht eine mechanische Grob-Feinuntersetzung (nicht dargestellt) im Verhältnis 1:9 die erforderliche Feinstpositionierung des Regelkreises, der den elektronischen Autokollimator 135, einen Rechner (nicht dargestellt) inklusive Regelungssoftware und die mechanischen Antriebe 126 und 132 umfasst. Die Achssysteme des Theodolits 130 und der Theodolitenprüfmaschine sind somit nach der Autokollimationseinstellung im Wesentlichen kollinear. Der Rechner übernimmt die Steuerung des Messablaufs, die Regelung der Zieleinstellung und die Auswertung der Messergebnisse.

Der Verfahrensablauf des Vertikal- und Horizontalmessvorgang wird im Folgenden beschrieben. Die Messbrücke 134 wird vor dem Aufsetzen des zu prüfenden Theodolits 130 in eine etwa horizontale Lage gebracht, sodass sich der Autokollimator 135 ungefähr in der Vertikalposition 100 gon, gemessen vom Zenit, auf den die Vertikalachse 121 weist, befindet. Der Theodolit 130 wird auf dem Dreifuss 129 des Horizontalmessteils 124 mit in Lotrichtung weisender Stehachse fixiert, so dass die Stehachse des Theodolits 130 und die Vertikalachse 121 der Theodolitenprüfmaschine möglichst zusammenfallen, mindestens jedoch kollinear sind. Der plane Aufsatzspiegel 142 wird auf dem Objektiv des Fernrohrs 137 des Theodolits 130 durch die Spannzange fixiert. Das Fernrohr 137 wird in den gabelförmigen Mitnehmer 136 der Messbrücke 134 eingeschwenkt. Zu Beginn der Messung bewegt sich die Messbrücke 134 auf die vom Zenit aus gemessene Vertikalposition 260 gon, den Beginn des vertikalen Messbereichs. Der Mitnehmer 136 nimmt bei dieser Bewegung das Fernrohr 137 des Theodolits 130 mit. Durch die darauf folgende Autokollimationseinstellung wird der Autokollimator 135 durch präzises Einstellen der Messbrücke 134 und des Horizontalmessteils 124 auf den am Fernrohr 137 fixierten Aufsatzspiegel 142 ausgerichtet. Aufgrund des Spiels zwischen Mitnehmer 136 und Fernrohr 137 wird das Fernrohr 137 während der Autokollimationseinstellung nicht vom Mitnehmer 136 verstellt. Nach dieser Autokollimationseinstellung werden die Winkelwerte des Theodolits 130 und die der Theodolitenprüfmaschine vom Rechner abgefragt und gespeichert. Die Differenz der Vertikalwinkel ist der Fehler des Theodolits 130 für die jeweilige Vertikalposition, hier 260 gon. Die Messung des ersten Messpunktes ist hiermit beendet. Für die Messung des nächsten Messpunktes bewegt der Vertikalantrieb 132 der Theodolitenprüfmaschine die Messbrücke 134 und über den Mitnehmer 136 auch das Fernrohr 137 des Theodolits 130 um etwa 15 gon auf die Vertikalposition 275 gon. Nun beginnt die Messung des zweiten Punktes nach dem oben beschriebenen Schema. Auf diese Art werden Vertikalmessungen bis zur Vertikalposition 140 gon durchgeführt, wobei der Bereich von 380 bis 20 gon nahe des Zenits ausgelassen wird, da in diesem Bereich ein eventueller Versatz der Prüflings- und der Theodolitenprüfmaschinen-Achsen kaum oder nicht durch den Horizontalantrieb 126 der Theodolitenprüfmaschine korrigiert werden kann. Denn die horizontale Bewegung des Lichtflecks auf dem Positionsdetektor des Autokollimators 135 im Verhältnis zu dem Vertikaldrehwinkel ist mit dem Tangens des Winkels zwischen der horizontalen Lage und der tatsächlichen Lage der Messbrücke 134 verknüpft. Nach Abschluss der Vertikalprüfung wird die Messbrücke 134 in die Vertikalposition 100 gon bewegt und es wird mit der Untersuchung des Horizontalwinkelabgriffs des Theodolits 130 begonnen. Über das Horizontalmessteil 124 wird der Theodolit 130 in eine Richtung gedreht, wobei sich das Unterteil 143 und die Alhidade 144 des Theodolits 130 gemeinsam bewegen, bis das Fernrohr 137 des Theodolits 130 an den Anschlag des gabelförmigen Mitnehmers 136 stösst und festgehalten wird, wodurch die Alhidade 144 stoppt und nur das Unterteil 143 weiterbewegt wird. Ist die gewünschte horizontale Winkelposition des Theodolits 130 erreicht, wird das Horizontalmessteil 124 geringfügig in die Gegenrichtung gedreht, wodurch sich das Fernrohr 137 vom Mitnehmer 136 wegdreht und somit bei der Autokollimationseinstellung kein mechanischer Anschlag den Einregelvorgang behindert. Nach der Autokollimationseinstellung erfolgt die Aufnahme der Messwerte analog zu der Vertikalmessung. Bei der Horizontaluntersuchung werden über den Umfang gleichmässig verteilt etwa 35 Punkte gemessen. Nach Abschluss des gesamten Horizontal- und Vertikalprüfvorganges werden die gespeicherten Winkelpaare ausgewertet.

Diese bekannte Theodolitenprüfmaschine weist zahlreiche Nachteile und Probleme auf, die bisher nicht hinreichend gelöst werden konnten. Da die den Autokollimator tragende Messbrücke vor allem in horizontaler Position hohen Biegemomenten durch das Eigengewicht und das Gewicht des Autokollimators ausgesetzt ist, muss die Messbrücke einen stabilen Aufbau aufweisen, damit eine die Messung verfälschende Verformung der Messbrücke möglichst vermieden wird. Jedoch sollte das Gewicht der Messbrücke nicht zu hoch sein, da im Rahmen der vorgegebenen Toleranzen die Tragfähigkeit der hochpräzisen Kippachslagerung, welche die Messbrücke am Granitrahmen lagert, stark beschränkt ist. Aus statischen Gründen, insbesondere um Verformungen zu vermeiden und die Kippachslagerung möglichst wenig zu belasten, erscheint eine U-Form mit beidseitiger Kippachslagerung als vorteilhaft, die wiederum einen zweisäuligen Granitrahmen verlangt. Das hohe Gewicht der Messbrücke erfordert zudem aufgrund der beschränkten Tragfähigkeit der als vorgespannte Kugelbuchsenlager ausgebildeten Kippachslager ein aufwendiges Gewichtskompensationssystem, welches das Gesamtgewicht der Theodolitenprüfmaschine weiter erhöht. Der aufgrund der beidseitigen Kippachslagerung, erforderliche, die Messbrücke umgebende, massive Granitrahmen, die U-Form der Messbrücke und das Gewichtskompensationssystem schränken die Zugänglichkeit zum zu prüfenden Theodolit stark ein, was insbesondere bei Justierarbeiten und grossen Prüflingen hinderlich ist. Der massive Aufbau und das Gewicht der bekannten Theodolitenprüfmaschine verhindern eine breite Einsatzmöglichkeit, da einerseits Belastungstoleranzen von normalen Industrieböden überschritten werden, andererseits die Theodolitenprüfmaschine nicht durch eine normale Labortüre transportiert werden kann. Wegen der beidseitigen Anordnung der Kippachslager ist aufgrund von statischer Überbestimmtheit ein spannungsfreies, exaktes Justieren der einzelnen Kippachslager höchst problematisch, da ein Verstellen eines Kippachslagers sich auch stets auf das gegenüberliegende Kippachslager auswirkt, womit die hohen Präzisionsanforderungen nur mit grossem Justieraufwand erfüllt werden können. Auch die stabile Montage des Aufsatzspiegels auf dem Fernrohr ist kritisch, da Abweichungen von der Spiegelebene zur Zielachse möglichst zu vermeiden sind und eine exakte Ausrichtung des Aufsatzspiegels einen grossen Aufwand bedarf. Unterschiedliche Fernrohrgeometrien und Theodolitenbaureihen erfordern unterschiedliche Aufsatzspiegel-Spannzangen. Da die Referenzstruktur für den gesamten Messablauf von dem Aufsatzspiegel gebildet wird, kann lediglich eine Überprüfung der Winkelsensoren und der Achsen des Theodolits erfolgen. Fehler in der Fernrohr-Optik bleiben somit unberücksichtigt. Mittels des eingesetzten Autokollimators ist lediglich die Ausrichtung des Aufsatzspiegels detektierbar, nicht jedoch die Lage und Qualität einzelner Strukturen der Fernrohr-Optik, wie beispielsweise die Qualität bzw. Ausrichtung einzelner Linsen, eines Teilerwürfels, einer Bildaufnahmefläche oder des Tubusablaufs. Eine Überprüfung eines eventuell im Theodolit integrierten Laserdistanzmessers kann nicht stattfinden, da der Aufsatzspiegel die Fernrohroptik verdeckt. Auch der Neigungsmesser im Theodolit ist mit der bekannten Theodolitenprüfmaschine nicht kalibrierbar. Die Entwicklung neuer und noch präziserer Theodoliten verlangt zudem nach einer noch höheren Genauigkeit der Theodolitenprüfmaschine.

In der SU 763682 A wird eine manuell zu bedienende Vorrichtung zum Überprüfen eines geodätischen Geräts, das insbesondere eine um eine Drehachse in einer Vertikalebene kippbare Visiervorrichtung aufweist, offenbart. Ein feststehender Eichkollimator grosser Brennweite mit einem Okularmikrometer ist auf einem Gestell, das sich auf einem Tisch befindet, so positioniert, dass die Kollimatorachse mit der Drehachse der Visiervorrichtung - der Kippachse - des zu untersuchenden Geräts, das ebenfalls auf dem Tisch aufgestellt ist, übereinstimmt. Das zu untersuchende Gerät kann mittels einer drehfesten Hubvorrichtung geneigt und horizontal ausgerichtet werden. Zwischen dem Eichkollimator und dem zu untersuchenden Gerät ist ein einseitig gelagerter, als Messbügel zur Vertikalwinkelprüfung wirkender Drehblock angeordnet, dessen Drehachse mit der Kollimatorachse - und somit insbesondere mit der Kippachse des zu untersuchenden Geräts - zusammenfällt und der eine Durchgangsöffnung für den Durchgang von Kollimator-Strahlenbündeln aufweist. Der mit mehreren Gegengewichten ausgestattete schwere Drehblock umfasst ein optisches System, welches das Strahlenbündel derart umlenkt, dass es zuerst um einen bestimmten Versatz parallel versetzt wird, der nicht kleiner ist als die Aussenabmessung des grössten zu überprüfenden Gerätes, und welches anschliessend das parallel versetzte Strahlenbündel um 90° in der Ebene des parallelen Versatzes umlenkt, wobei die Umlenkung mittels eines Pentaprismas im Schnittpunkt der Achse des verschobenen Bündels mit der Vertikalebene der kippbaren Visiervorrichtung des zu untersuchenden Geräts erfolgt. Auf der ersten reflektierenden Fläche des optischen Systems des Drehblocks ist eine kleine Öffnung vorgesehen, durch welche ein Teil des Kollimator-Strahlenbündels ohne Reflexion oder Ablenkung hindurch treten kann. Der Drehblock ist mit einem hochgenauen Limbus und einer Winkelablesevorrichtung ausgestattet. Handelt es sich bei dem zu untersuchenden Gerät um einen Theodolit, so ist es mittels der Vorrichtung durch Schwenken des Drehblocks möglich, die Vertikalwinkelmessvorrichtung des Theodolits zu überprüfen und eine mathematische Fehlerkorrekturfunktion zu bilden. Eine Horizontalwinkelkorrektur ist aufgrund des feststehenden Theodolits lediglich durch Durchschlagen des Theodolitfernrohrs für maximal vier Horizontalwinkel möglich, so dass keine Erzeugung einer kontinuierlichen Horizontalwinkelkorrekturfunktion realisierbar ist. Das Ausrichten des Theodolitfernrohrs auf den Drehblock und umgekehrt erfolgt, indem der Benutzer mit dem Auge entweder das Kollimatornetz im Theodolitfernrohr oder das Theodolitnetz im Kollimatorfernrohr betrachtet und die Achse händisch verstellt. Die Kalibrierung der gesamten Vorrichtung wird mit Hilfe des Autokollimatorokulars des Kollimators vorgenommen, indem ein Eichprisma oder ein Polygonspiegel auf dem Tisch angeordnet wird und bei unterschiedlichen Stellungen des Drehblocks die Konstanz der Lage der optischen Achse der Vorrichtung gemessen wird. Da die Vorrichtung eine nicht drehbare Aufnahmevorrichtung für den Theodolit aufweist, ist es nicht möglich, innerhalb eines Messvorgangs mehrere Horizontalwinkel zu überprüfen. Somit ist es nicht möglich, eine aus einer Vielzahl von Horizontalwinkelmessungen gewonnene Korrekturfunktion zu ermitteln und diese im elektronischen Theodolit zur automatischen Fehlerkorrektur zu speichern. Da lediglich das Kollimatornetz oder das Theodolitnetz als Bezug für die Überprüfung dient, ist es nicht möglich, einzelne Strukturen, beispielsweise Linsenoberflächen, Teilerwürfel, Bildaufnahmefläche, oder einen Laserdistanzmesser in der Ausrichtung und Lage zu prüfen oder zu kalibrieren. Da bei dieser Vorrichtung der Eichkollimator weit entfernt vom zu untersuchenden Gerät so angeordnet ist, dass die Kollimatorachse mit der Drehachse oder Kippachse des Geräts zusammenfallt, muss ein aufwendiges und fehleranfälliges Strahlführungssystem mit mehreren Spiegeln im Drehblock angeordnet sein. Hierdurch wird einerseits die Torsions- und Biegefestigkeit des Drehblocks verringert, als auch das Gewicht des Drehblocks und der gesamten Vorrichtung erhöht, da schwere Gegengewichte erforderlich sind. Folglich ist es mit dem offenbarten Gerät systembedingt nicht möglich, höchste Genauigkeitsanforderungen bis unter 0,5" bzw. 0,15 mgon zu erfüllen. Jedoch zeichnet sich die Vorrichtung durch eine leichte Zugänglichkeit des zu überprüfenden Geräts aus, da von drei Seiten auf das Gerät zugegriffen werden kann. Die Möglichkeit zur Durchführung eines vollautomatischen Kalibrierprozesses mit der offenbarten Vorrichtung besteht nicht.

Die Forderung nach einerseits einem kompakten und gewichtsreduzierten Aufbau einer Prüfvorrichtung, die einen vollautomatischen Messprozess ermöglicht, einer besseren Zugänglichkeit des Prüflings, einer breiten Verwendungsvielfalt und einer einfacheren Justiermöglichkeit der Prüfvorrichtung, andererseits einer noch höheren Messgenauigkeit stellt somit einen Zielkonflikt dar, der bisher nicht hinreichend gelöst werden konnte.

Die Aufgabe der Erfindung besteht darin, eine hochgenaue, universell einsetzbare, stabile und einfach justierbare Vorrichtung zum Prüfen oder Kalibrieren der winkelabhängigen Ausrichtung eines hochpräzisen Prüflings zu schaffen, deren Aufbau eine gute Zugänglichkeit zum Prüfling zulässt und die ein zuverlässiges, stabiles, automatisierbares und in der Durchführung einfaches Prüfen oder Kalibrieren der winkelabhängigen Ausrichtung des hochpräzisen Prüflings ermöglicht, und die Nachteile der gattungsgemässen Prüfmaschinen zu beheben.

Diese Aufgabe wird durch die Verwirklichung der Merkmale des unabhängigen Anspruchs gelöst. Merkmale, die die Erfindung in alternativer oder vorteilhafter Weise weiterbilden, sind den abhängigen Ansprüchen zu entnehmen.

Der Erfindung liegt der Gedanke zugrunde, dass sowohl mit einer einseitigen oder mittigen Lageranordnung und durch einen den Prüfling umgreifenden oder umschliessenden, insbesondere in Bezug zur Messteilachse in einem wesentlichen Teil achs-, spiegel- oder rotationssymmetrischen Grundform des Messteils, als auch durch Einsatz einer Zusatzoptikeinheit wesentliche Verbesserungen gegenüber dem Stand der Technik erzielt werden können.

Im Folgenden wird die erfindungsgemässe Vorrichtung allgemein beschrieben. Mögliche konkrete beispielhafte Ausführungsformen sind im Anschluss den Figuren und der Figurenbeschreibung zu entnehmen.

Die Vorrichtung zum Prüfen oder Kalibrieren der winkelabhängigen Ausrichtung einer Referenzstruktur eines hochpräzisen Prüflings weist einen Sockel als stabile Bezugsbasis für den Prüf- oder Kalibriervorgang auf. Dieser Sockel ist als ein Steinkörper, Metallkörper oder als ein, aus mindestens einem anderen geeigneten Material gefertigter oder - beispielsweise aus Streben - zusammengesetzter Körper, der als Bezugsbasis dient, ausgebildet. Der Sockel weist beispielsweise eine L-förmige Grundstruktur auf. Ein Aufnahmeteil zur Aufnahme des Prüflings ist gegenüber dem Sockel um eine - insbesondere in Lotrichtung verlaufende - Aufnahmeteil-Achse über ein Hochpräzisionslager drehbar gelagert. Das Aufnahmeteil ist beispielsweise als Präzisionsdrehtisch mit einer - gegebenenfalls mittels eines Dreifusses einstellbaren - Halterung zum Halten des Prüflings ausbildbar. Ein Verdrehwinkel des Aufnahmeteils gegenüber dem Sockel um die Aufnahmeteil-Achse, im Folgenden als Aufnahmeteil-Verdrehwinkel bezeichnet, ist z.B. mittels eines Winkel-Encoders mit dynamischem oder statischem Winkelabgriff hochpräzise messbar. Sofern eine exakte absolute vertikale Ausrichtung des Aufnahmeteils oder der Halterung zum Prüfen oder Kalibrieren erforderlich ist, ist es weiters möglich, einen Neigungssensor in das Aufnahmeteil zu integrieren. Ausserdem ist es realisierbar, Mittel zum Neigen des Aufnahmeteils oder des gesamten Sockels einzusetzen. Diese Mittel zum Neigen können entweder zum exakten vertikalen Ausrichten insbesondere des Aufnahmeteils oder des Prüflings, oder zum Prüfen eines Neigungssensors des Prüflings verwendet werden. Bei elektronischen Prüflingen, die eine Spannungsversorgung benötigen oder Messwerte übertragen, ist das drehbar gelagerte Aufnahmeteil ausserdem gegebenenfalls mit Mitteln zur elektrischen Verbindung, beispielsweise einem Schleifring- oder Rollringsystem, ausgestattet, um eine elektrische Verbindung zwischen dem Sockel und dem Prüfling zu ermöglichen. Selbstverständlich können stattdessen auch Funkübertragungssysteme - beispielsweise Bluetooth -, Infrarotsysteme oder dergleichen Systeme eingesetzt werden.

Die Vorrichtung umfasst ausserdem ein Messteil, das gegenüber dem Sockel um eine die Aufnahmeteil-Achse rechtwinklig schneidende Messteil-Achse drehbar gelagert ist. Dabei ist ein Messteil-Verdrehwinkel um die Messteilachse z.B. mittels eines Winkel-Encoders mit dynamischem oder statischem Winkelabgriff hochpräzise messbar. Die Grundform des Messteils ist so ausgebildet, dass das Messteil den Prüfling durch eine im Wesentlichen spiegel- oder achssymmetrische - beispielsweise zangenartige - Ausbildung in Bezug auf die Messteilachse von mindestens zwei Seiten umgreift oder durch eine im Wesentlichen rotationssymmetrische Ausbildung vollumfänglich umschliesst. Das Messteil ist zumindest in einem bestimmten Winkelbereich unabhängig vom Prüfling verdrehbar. Eine derartige umgreifende oder umschliessende, zumindest teilweise symmetrische Ausbildung des Messteils hat mehrere Vorteile. Da der Schwerpunkt des Messteils nahe oder auf der Messteilachse liegt, kann eine zusätzliche Gewichtskompensation entfallen. Hierdurch wird der Antrieb des Messteils entlastet, die Biege- und Torsionsbelastung erheblich reduziert und somit die Messgenauigkeit aufgrund geringerer Toleranzen drastisch erhöht. Ein weiterer Vorteil eines derartigen Messteilaufbaus besteht in der Möglichkeit, mehrere Messkomponenten innerhalb der Messebene des Messteils - insbesondere auf gegenüberliegenden Seiten in Bezug auf den Prüfling - anzuordnen. Hierdurch wird die Realisierung zahlreicher neuer Messverfahren möglich, durch welche die Messgenauigkeit weiter erhöht werden kann.

Auf dem Messteil ist mindestens eine Optikeinheit mit einem optischen Detektor angeordnet. Die Optikeinheit dient zum Empfangen mindestens eines mit der Referenzstruktur des Prüflings in Wechselwirkung stehenden Prüflings-Strahlenbündels, das im Wesentlichen in einer von der Messteil-Achse senkrecht durchstossenen Messebene, in der die Aufnahmeteil-Achse liegt, verläuft. Hierdurch erzeugt das Prüflings-Strahlenbündel mindestens einen Punkt auf dem Detektor. Das Prüflings-Strahlenbündel kann entweder direkt, eventuell geformt durch ein Linsensystem, auf den Detektor treffen, oder über ein optisches Umlenkelement, beispielsweise eine Spiegelungseinheit oder einen Lichtleiter, in Richtung der Optikeinheit und des Detektors umgelenkt oder geleitet werden und indirekt auf den Detektor treffen. Bei Einsatz eines solchen optischen Umlenkelements ist es möglich, die Optikeinheit ausserhalb der Messebene, eventuell auf einem Teilelement des Messteils, anzuordnen. Unter dem mit der Referenzstruktur des Prüflings in Wechselwirkung stehenden Prüflings-Strahlenbündel ist allgemein ein Strahlenbündel, beispielsweise ein Lichtstrahlenbündel, zu verstehen, das direkt oder indirekt in einer Wechselwirkung mit mindestens einer Referenzstruktur des Prüflings oder mindestens einem mit einer Referenzstruktur des Prüflings in Verbindung stehenden, eventuell am Prüfling montierten, beispielsweise von einem Aufsatzspiegel gebildeten Teil steht und/oder von einem solchen Teil kommt. Somit muss das Prüflings-Strahlenbündel nicht direkt von dieser Referenzstruktur des Prüflings kommen, sondern kann auch von einer an der Referenzstruktur des Prüflings zur Durchführung des Messvorgangs montierten Hilfskomponente herrühren. Die Wechselwirkung zwischen dem Prüflings-Strahlenbündel und der Referenzstruktur oder dem mit der Referenzstruktur in Verbindung stehenden Teil erfolgt beispielsweise durch Reflexion, Streuung, Brechung, Strahlformung, Abblendung, Filterung oder Strahlerzeugung.

Mit dem Begriff "Prüfling" ist ein zu prüfendes oder justierendes Element als Ganzes gemeint, beispielsweise ein geodätisches Messinstrument, eine polygonale Spiegeleinheit oder ein mechanisches Hochpräzisionsteil, ohne allfällige zur Durchführung des Messvorgangs montierte Hilfskomponenten wie beispielsweise ein Aufsatzspiegel. Mit der Referenzstruktur ist eine Struktur des Prüflings gemeint, die konkret bezüglich der Winkelausrichtung oder ihrer Qualität zu prüfen ist. Dies kann beispielsweise ein Körper, eine Fläche, eine Kante oder ein Punkt sein. Bei einem Prüfling mit einer gegenüber einer Grundfläche exakt auszurichtenden oder ausgerichteten Spiegelfläche wird die Referenzstruktur beispielsweise durch diese Spiegelfläche gebildet. Bei einem als Theodoliten ausgebildeten Prüfling stellt die Referenzstruktur des Prüflings beispielsweise ein Teil des horizontal und vertikal dreh- bzw. kippbaren Fernrohrs dar.

Sowohl das Aufnahmeteil, als auch das Messteil sind vorzugsweise elektromotorisch antreibbar. Somit bildet der Empfangsbereich der Optikeinheit, bezogen auf den Prüfling, - durch Verstellen von Aufnahmeteil und Messteil um die Aufnahmeteil-Achse bzw. die Messteil-Achse - einen den Prüfling zumindest teilweise umschliessenden Abschnitt einer Kugeloberfläche. Sofern die Aufnahmeteil-Achse in Lotrichtung weist und somit die Messteil-Achse in der Horizontalebene liegt, kann über das Aufnahmeteil ein Horizontalwinkel und über das Messteil ein Vertikalwinkel verstellt werden.

Die drehbare Lagerung des Messteils gegenüber dem Sockel erfolgt mittels einer Messteil-Lagereinheit, die vorzugsweise als ein Luftlager ausgebildet ist, das auf einer einzigen Seite der Messebene oder in der Messebene angeordnet ist. Da nur eine Lagereinheit zum Einsatz kommt, kann diese Lagereinheit hochpräzise justiert werden, ohne dass es aufgrund von statischer Überbestimmtheit zu Verspannungen mit einer zweiten, auf der anderen Seite der Messebene bzw. ausserhalb der Messebene angeordneten Lagereinheit kommt. Hierdurch ist es möglich, aussergewöhnlich hohe Messgenauigkeiten zu erreichen. Aufgrund der einseitigen, auf einer einzigen Seite der Messebene liegenden oder mittigen, in der Messebene liegenden Anordnung der Lagereinheit ist es möglich, einen kompakteren, insbesondere schmäleren Aufbau der gesamten Messvorrichtung zu realisieren und eine wesentlich bessere Zugänglichkeit zum Prüfling zu schaffen, wobei aufgrund der Eigenschaften eines Luftlagers die Messgenauigkeit der gesamten Vorrichtung sogar noch erhöht wird. Unterschiedliche Ausbildungen von radialen und axialen Luftlagern, Zylinder-, U-, Winkel- oder Plan-Luftlagern sind mittlerweile aus dem Stand der Technik bekannt. Das Luftlager muss dermassen beschaffen sein, dass eine hochpräzise Lagerung des Messteils um die Messteil-Achse unter Berücksichtigung der geforderten Toleranzen der Vorrichtung bei den auf das Lager wirkenden Kräfte gewährleistet ist und sowohl die Steifigkeit, als auch die Dämpfung den Anforderungen entspricht. Die Auslegungskriterien von Luftlagern sind ebenfalls aus dem Stand der Technik bekannt. Unter der als Luftlager ausgebildeten Lagereinheit ist sowohl ein Einzellager, als auch eine Anordnung mehrerer - insbesondere verspannter - Lager in Form einer Lagereinheit zu verstehen. Selbstverständlich ist es möglich, anstelle eines Luftlager ein konventionelles Gleit- oder Wälzlager oder eventuell ein Magnetlager zu verwenden. Teilweise können in diesen Fällen jedoch nicht derart geringe Toleranzen wie bei einem Luftlager erzielt werden.

Ausserdem ist es möglich, auch das Hochpräzisionslager des Aufnahmeteils als ein Luftlager auszubilden.

Gegebenenfalls ist das Messteil so ausgebildet, dass ausser der Optikeinheit auf derjenigen Seite des Messteils, die der Optikeinheit bezüglich der Messteil-Achse gegenüber liegt, eine Zusatzoptikeinheit angeordnet ist. Diese Zusatzoptikeinheit ist z.B. als ein Zusatz-Emitter, ein Zusatz-Spiegel, eine Zusatz-Autokollimator oder eine Zusatz-Kamera ausbildbar. Mögliche Ausführungsformen des erfindungsgemässen Messteils sind der Beschreibung der Figuren zu entnehmen.

Eine Steuerungs-Regelungs-Einheit übernimmt die Steuerung der Vorrichtung, insbesondere das motorische Ausrichten der Optikeinheit gegenüber der Referenzstruktur des Prüflings mittels motorischem Einstellen des Aufnahmeteils und des Messteils in Abhängigkeit von der Lage des mindestens einen vom Prüflings-Strahlenbündel hervorgerufenen Punktes auf dem Detektor, insbesondere auch oder alternativ in Abhängigkeit von einem Signal einer Zusatz-Optikeinheit. Gegebenenfalls werden erfasste Messdaten, insbesondere die der Winkel-Encoder, gespeichert und/oder ausgewertet. Die Steuerungs-Regelungs-Einheit ist beispielsweise als ein Personalcomputer mit entsprechenden Schnittstellen, ein Verbund von Steuerungen oder intelligenten Sensoren und Aktoren, eine SPS oder ein mit einem Datennetz verbundenes Rechnersystem ausbildbar.

Vor allem bei Prüflingen, deren bezüglich Ihrer Winkelausrichtung zu prüfende oder kalibrierende Referenzstruktur gegenüber dem restlichen Prüfling verstellbar ist, wie dies beispielsweise bei einem Theodolit, dessen Winkel-Encoder zu prüfen sind, der Fall ist, kommt zum Verstellen der Referenzstruktur, beispielsweise des Theodolitfernrohrs, ein Handhabungsroboter, der z.B. auf dem Sockel angeordnet ist, zum Einsatz. Somit ist es möglich, die Referenzstruktur und die Optikeinheit des Messteils simultan zu verstellen und Winkelabweichungen - insbesondere eines Winkel-Encoders des Prüflings - innerhalb einer kurzen Prüfzeit zu ermitteln.

Zum Prüfen des thermischen Verhaltens eines Prüflings kann ein thermischer Strahler eingesetzt werden, der derart angeordnet ist, dass der Prüfling zumindest von einer Seite erwärmt werden kann, wodurch beispielsweise der Einfluss einer Sonnenbestrahlung und der damit verbundene thermische Verzug simulierbar ist.

Die beschriebene erfindungsgemässe Vorrichtung kann für unterschiedliche Prüfverfahren eingesetzt werden. Ein mögliches Prüfverfahren ist das aus dem Stand der Technik bekannte, bei der Theodolitenprüfmaschine zum Einsatz kommende, oben beschriebene Prüfverfahren, bei welchem ein Vorsatzspiegel als Referenzfläche dient.

Ausserdem ist es jedoch möglich, ein Verfahren einzusetzen, bei welchem eine Strahlung von der Referenzstruktur des Prüflings erzeugt oder bezüglich eines Strahlungsparameters - insbesondere durch Reflexion, Abblendung, Filterung oder Formung - verändert wird. Diese erzeugte oder veränderte Strahlung bildet das oben beschriebene Prüflings-Strahlenbündel.

Bei diesem Verfahren wird zunächst der Prüfling auf dem Aufnahmeteil angeordnet. Anschliessend folgt ein Vor-Ausrichten der Optikeinheit und/oder der Referenzstruktur des Prüflings, so dass das Prüflings-Strahlenbündel zumindest teilweise auf den Detektor trifft und dort den mindestens einen Punkt erzeugt. Nach dem Auswerten der Lage dieses mindestens einen Punktes auf dem Detektor, insbesondere durch die Steuerungs-Regelungs-Einheit, erfolgt ein Fein-Ausrichten der Optikeinheit gegenüber der Referenzstruktur über die Steuerungs-Regelungs-Einheit in Abhängigkeit von der Lage des mindestens einen Punktes auf dem Detektor, so dass der mindestens eine Punkt eine bestimmte Solllage erreicht. Daraufhin.folgt ein Erfassen zumindest des Aufnahmeteil-Verdrehwinkels und/oder des Messteil-Verdrehwinkels. Das genannte Prüflings-Strahlenbündel wird von einer Strahlung gebildet, die von der Referenzstruktur des Prüflings erzeugt oder von dieser bezüglich eines Strahlungsparameters, beispielsweise durch Reflexion, Streuung, Brechung, Abblendung, Filterung oder Formung, verändert wird. Die Erzeugung der Strahlung erfolgt über einen Emitter, der beispielsweise als Temperatur- oder Lumineszenzstrahler, als chemischer oder radioaktiver Strahler ausgebildet ist. Da das Prüflings-Strahlenbündel, das auf den Detektor trifft, somit direkt oder indirekt von der Referenzstruktur des Prüflings kommt und nicht von einer Hilfskomponente wie beispielsweise einem Vorsatzspiegel herrührt, kann die Referenzstruktur höchst präzise gegenüber der Optikeinheit - bzw. umgekehrt - ausgerichtet werden, da Fehler durch eine mangelhafte Ausrichtung der Hilfskomponente gegenüber der Referenzstruktur vermieden werden. Ausserdem ist es möglich, Referenzstrukturen - beispielsweise in Form einer beleuchteten oder selbst leuchtenden Marke - zu wählen, die mechanisch nur schwierig koppelbar sind, insbesondere Komponenten, die optisch detektierbar innerhalb eines Linsensystems angeordnet sind. Dies sind beispielsweise Linsen, Strichplatten, Teilerwürfel oder eine Bildaufnahmefläche innerhalb eines Linsensystems.

Dieses Verfahren eignet sich unter anderem zum Prüfen oder Kalibrieren eines mit einer optischen Zieleinheit - insbesondere einem Fernrohr - ausgestatteten Prüflings, vorzugsweise einen Theodolit, einen Nivellier oder einen geodätischen Scanner, wobei wie optische Zieleinheit um eine Stehachse und gegebenenfalls eine Kippachse verstellbar ist. Ein Stehachs-Verdrehwinkel und gegebenenfalls ein Kippachs-Verdrehwinkel sind hierbei erfassbar. Die optische Zieleinheit bestimmt eine Zielachse und weist eine optisch detektierbare Marke, beispielsweise eine Strichplatte oder einen Leuchtaustritt, auf. Ein Prüflings-Unterteil ist auf dem Aufnahmeteil so angeordnet, dass die Aufnahmeteil-Achse gegenüber der Stehachse und gegebenenfalls die Messteil-Achse gegenüber der Kippachse im Wesentlichen kollinear verlaufen. Vor, während oder nach dem oben erwähnten Vor-Ausrichten der Optikeinheit erfolgt ein Vor-Ausrichten der Zieleinheit des Prüflings. Durch Erfassen des Stehachs-Verdrehwinkels und/oder gegebenenfalls des Kippachs-Verdrehwinkels des Prüflings kann mittels Vergleichen mit dem Aufnahmeteil-Verdrehwinkel bzw. dem Messteil-Verdrehwinkel der Vorrichtung das Prüfen oder Kalibrieren des Prüflings erfolgen.

Die Strahlung wird in einer möglichen allgemeinen Ausführungsform von einem in der Optikeinheit angeordneten Emitter erzeugt. Die Optikeinheit besitzt hierbei neben dem Emitter einen Detektor und ein Linsensystem zum Formen der vom Emitter ausgesandten Strahlung und zum Fokussieren des Prüflings-Strahlenbündels auf den Detektor. Das Linsensystem weist bevorzugt eine variable Brennweite auf. Dabei fällt die geformte Strahlung auf eine bezüglich der Ausrichtung zu prüfende Reflexionsfläche, die von der Referenzstruktur des Prüflings gebildet wird, und wird von dieser reflektiert. Die von der Referenzstruktur reflektierte Strahlung bildet das Prüflings-Strahlenbündel, das bei entsprechender Ausrichtung der Referenzstruktur gegenüber der Optikeinheit von dem Linsensystem geformt wird, somit zumindest teilweise auf den Detektor trifft und bei exakter Ausrichtung mindestens einen Punkt auf einer bestimmten Solllage auf dem Detektor erzeugt. Die reflektierende Referenzstruktur wird eventuell - sofern erforderlich - mit einer reflexionsverstärkenden Beschichtung oder Folie beschichtet. Als Emitter wird beispielsweise eine LED eingesetzt, deren Strahlung über einen Lichtwellenleiter in die Brennebene des Linsensystems eingespeist wird. Als Detektor ist - abhängig von Anwendungsfall - eine Quadrantendiode, ein CCD Bildsensor oder ein anderer aus dem Stand der Technik bekannter Detektor verwendbar. Handelt es sich bei der als Reflexionsfläche dienenden Referenzstruktur um eine ebene Fläche, wird die vom Emitter ausgesandte Strahlung vom Linsensystem der Optikeinheit vorzugsweise kollimiert, so dass das Prüflings-Strahlenbündel ebenfalls kollimiert ist. Bei einer konvexen oder konkaven Referenzstruktur, die beispielsweise von einer Linsenoberfläche des Prüflings gebildet wird, wird die Strahlung vom Linsensystem der Optikeinheit hingegen entsprechend der Wölbung, insbesondere des Radius, geformt, insbesondere fokussiert oder gestreut. Soll eine antireflexionsbeschichtete Linse als Referenzstruktur dienen, ist der Einsatz von zusätzlichen optischen Filtern im Strahlengang der Strahlung vorteilhaft. Handelt es sich bei der Referenzstruktur um eine Linse innerhalb eines Linsensystems, beispielsweise eine bestimmte Linse innerhalb einer Zieleinheit, kann ebenfalls der Einsatz von optischen Filtern zweckdienlich sein.

Ebenfalls ist es möglich, dass die Referenzstruktur durch eine optisch detektierbare Marke am Prüfling oder innerhalb des Prüflings gebildet wird, wie beispielsweise eine Strichplatte in der Optik der Zieleinheit des Prüflings, wobei die Strahlung bezüglich eines Strahlungsparameters verändert wird. Dies geschieht insbesondere, indem eine Stichplatte seitens des Objektivs oder des Okulars der optischen Zieleinheit des Prüflings durch einen Emitter - gegebenenfalls unter Einsatz optischer Filter - zumindest während des Fein-Ausrichtens der Vorrichtung beleuchtet wird, wobei diese Beleuchtung die Strahlung bildet. Hierbei wird die Strichplatte über das Objektiv der Zieleinheit auf den Detektor der Optikeinheit abgebildet, wodurch der mindestens eine Punkt auf dem Detektor erzeugt wird. Der Emitter kann hierbei entweder ebenfalls in der Optikeinheit oder separat untergebracht sein, beispielsweise in einer Zusatzoptikeinheit, die sich auf derjenigen, der Optikeinheit bezüglich der Messteil-Achse gegenüberliegenden Seite des Messteils befindet.

Weiters ist es realisierbar, auf einen Emitter ausserhalb der optischen Zieleinheit des Prüflings zu verzichten. Dies kann vor allem dann geschehen, wenn die Strichplatte selbstleuchtend ist, so dass die Strichplatte selbst die Strahlung erzeugt, oder wenn die Strichplatte durch einen in der optischen Zieleinheit angeordneten Emitter beleuchtet wird. Die Abbildung der Strichplatte auf den Detektor erfolgt vorzugsweise über das Objektiv, oder über das Okular. Selbstleuchtende Strichplatten, z.B. in Form eines Lumineszenzstrahlers, sind aus dem Stand der Technik bekannt.

Handelt es sich bei dem Prüfling um einen Videotheodolit, so ist es möglich, dass die Referenzstruktur von der Bildaufnahmefläche des Theodolits, insbesondere des CCD-Chips, gebildet wird, wodurch die Orientierung und eine allfällige Fehlausrichtung der Bildaufnahmefläche messbar sind. Weiters ist die Kamerakonstante überprüfbar.

Auch der Teilerwürfel in einem Theodolitfernrohr kann als Referenzstruktur dienen, wodurch mittels des Verfahrens auch die korrekte Winkelausrichtung eines Teilerwürfels überprüfbar ist.

Sofern ein Laserdistanzmesser im Prüfling angeordnet ist, kann das Prüflings-Strahlenbündel von einem vom Prüfling emittierten Lasermessstahl gebildet werden. Die Referenzstruktur wird somit von der Laserdiode gebildet. In diesem Fall ist es möglich, eine Ausrichtung der optischen Achse des Prüflings mit der Ausrichtung der Achse des Lasermessstrahls zu vergleichen und eine allfällige Ablage zu detektieren.

Ausserdem können Fehler innerhalb des optischen Systems der Zieleinheit festgestellt werden, indem über einen seitens des Okulars oder des Objektivs der Zieleinheit des Prüflings angeordneten Emitter eine Struktur mindestens eines Teils der Zieleinheit auf den Detektor abgebildet wird. Bei einem fokussierbaren optischen System ist es mittels des beschriebenen Verfahrens zudem möglich, den Gang der Fokussierlinse zu untersuchen.

Durch den Einsatz einer Zusatz-Optikeinheit, die auf der Seite des Okulars angeordnet ist, ergeben sich weitere Möglichkeiten. Die Zusatzoptikeinheit kann, wie die Optikeinheit, als ein Autokollimator oder eine Kamera zur Erfassung der Ausrichtung gegenüber einer Referenzstruktur, die von dem Okular selbst oder von eine von der Seite des Okulars detektierbaren Struktur gebildet wird, ausgebildet sein. Alternativ ist die Zusatz-Optikeinheit als ein Zusatz-Emitter ausgebildet, der ein Strahlenbündel, das bestimmte optische Eigenschaften - insbesondere eine räumliche Strukturierung in Form eines bestimmten Musters - aufweist, emittiert. Dieses Strahlenbündel wird nach einer Wechselwirkung mit mindestens einer Referenzstruktur des Prüflings von der gegenüberliegenden Optikeinheit in Form des Prüflings-Strahlenbündels erfasst. Durch Vergleich der optischen Eigenschaften - insbesondere der Strukturierungen - des von der Zusatz-Optikeinheit ausgesendeten Strahlenbündels und des von der Optikeinheit empfangenen Prüflings-Strahlenbündels werden allfällige optische Fehler in der optischen System des Prüflings, beispielsweise eine unzureichende optische Fernrohrqualität, allfällige Linsenfehler, Verzerrungen oder Verzeichnungen und Fokussierungsfehler, erfasst.

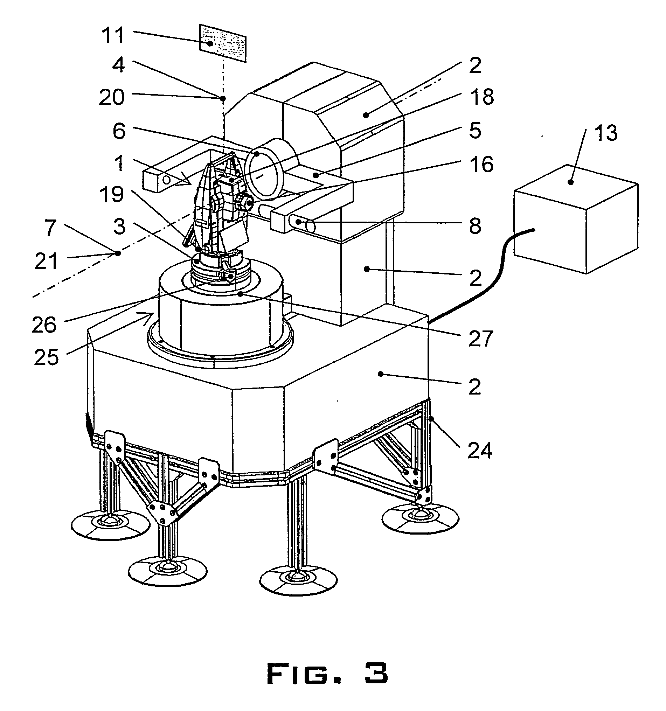

Im Folgenden wird die erfindungsgemässe Vorrichtung rein beispielhaft in Form von konkreten Ausführungsbeispielen unter Zuhilfenahme von Figuren genauer beschrieben. In der Figurenbeschreibung wird teilweise auf Bezugszeichen bereits zuvor beschriebener Figuren zurückgegriffen. Im Einzelnen zeigen
- Fig. 3: eine Darstellung einer Ausführungsform der Vorrichtung zum Prüfen oder Kalibrieren der winkelabhängigen Ausrichtung einer Referenzstruktur eines hochpräzisen Prüflings mit einer einseitig gelagerten Messwippe als Messteil;

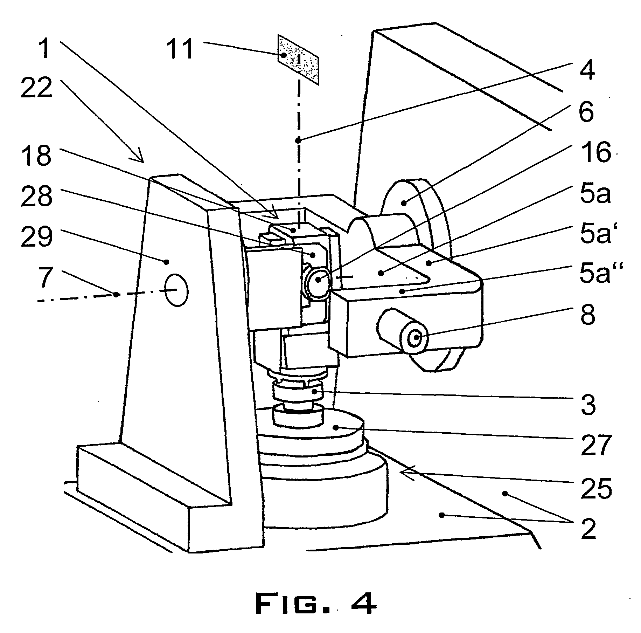

- Fig. 4: eine vereinfachte Ausschnittsdarstellung einer ersten alternativen Ausführungsform der Vorrichtung mit einer einseitig gelagerten Messwippe als Messteil und einem Handhabungsroboter;

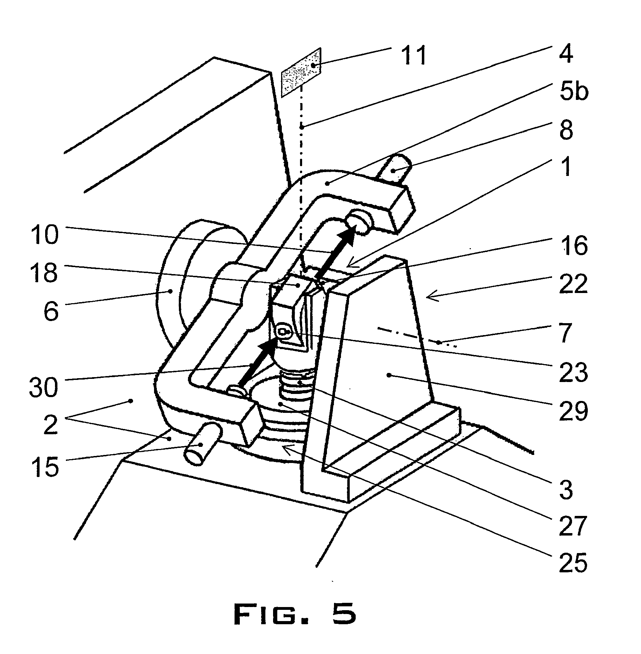

- Fig. 5: eine vereinfachte Ausschnittsdarstellung einer zweiten alternativen Ausführungsform der Vorrichtung mit einer einseitig gelagerten Messwippe als Messteil und einem Handhabungsroboter;

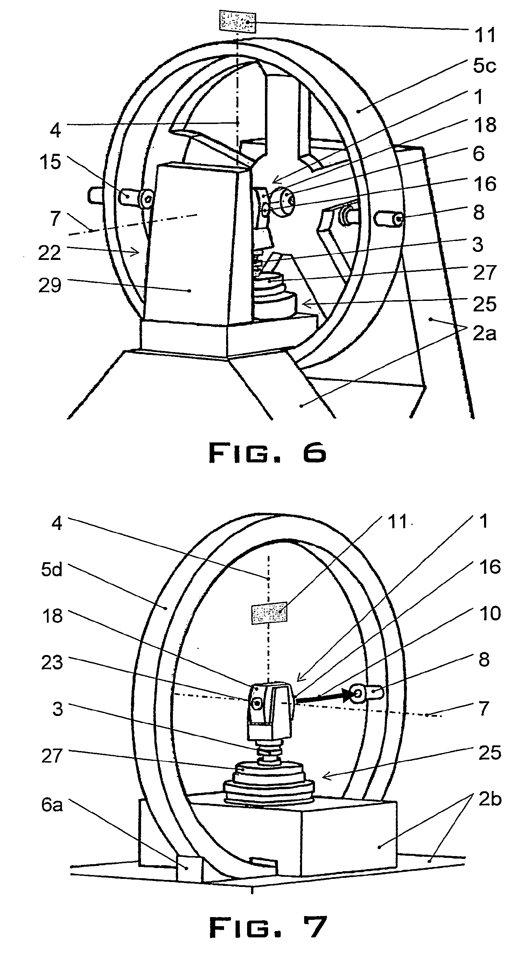

- Fig. 6: eine vereinfachte Ausschnittsdarstellung einer dritten alternativen Ausführungsform der Vorrichtung mit einem einseitig gelagerten Messrad als Messteil und einem Handhabungsroboter;
- Fig. 7: eine vereinfachte Ausschnittsdarstellung einer vierten alternativen Ausführungsform der Vorrichtung mit einem mittig, in der Messebene gelagerten Messring als Messteil;

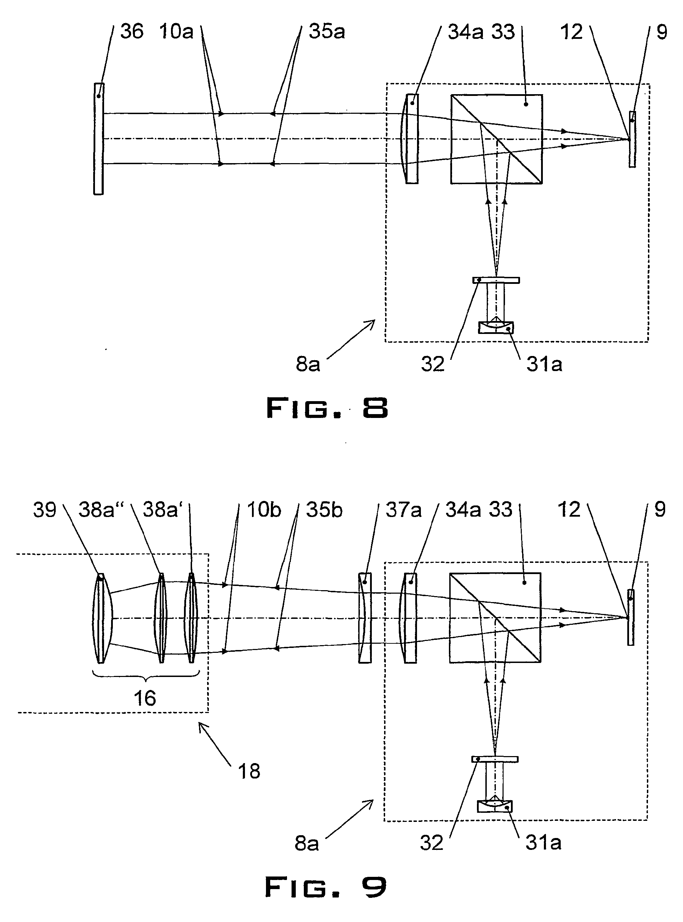

- Fig. 8: eine schematische Darstellung des Strahlengangs mit einer ebenen Reflexionsfläche als Referenzstruktur des Prüflings;
- Fig. 9: eine schematische Darstellung des Strahlengangs mit einer konvexen Linse als Referenzstruktur des Prüflings;

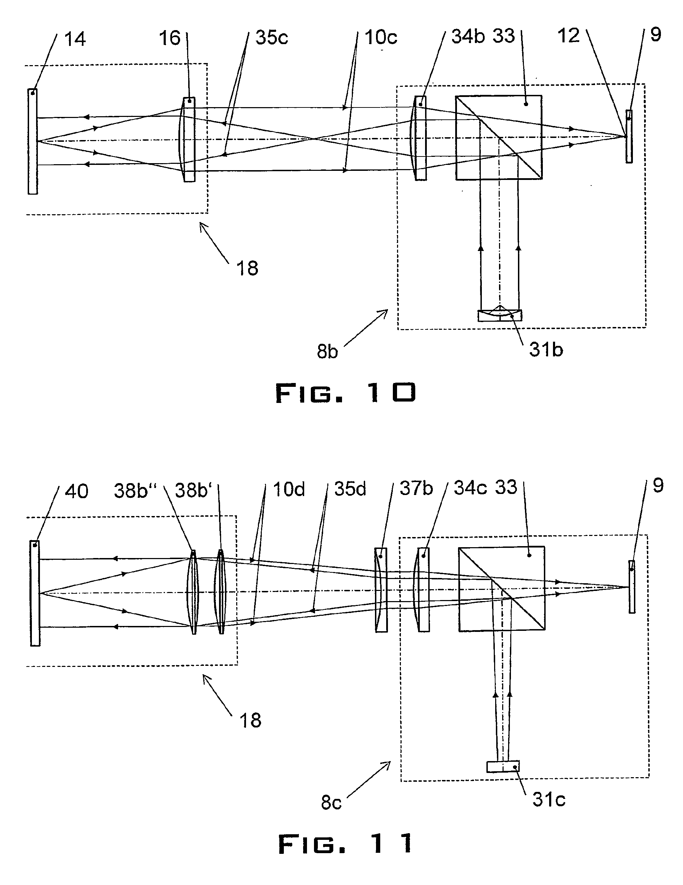

- Fig. 10: eine schematische Darstellung des Strahlengangs mit einer Strichplatte als Referenzstruktur des Prüflings; und
- Fig. 11: eine schematische Darstellung des Strahlengangs bei Abbildung einer Struktur innerhalb einer optischen Zieleinheit auf den Detektor.

In Fig. 3 ist eine mögliche Ausführungsform einer erfindungsgemässen Vorrichtung dargestellt. Die Vorrichtung umfasst einen Sockel 2 aus Granit, der auf einem Gestell 24 ruht. Der Sockel 2 ist aus mehreren Teilelementen zusammengesetzt, die gemeinsam etwa eine L-Form ergeben. Auf dem Sockel 2 befindet sich eine Horizontalmesseinheit 25, die ein Aufnahmeteil 3, welches um eine in Lotrichtung weisende Aufnahmeteil-Achse 4 motorisch hochpräzise drehbar ist, besitzt. Die gesamte Vorrichtung ist durch Verstellen des Gestells 24 so neigbar, dass die Aufnahmeteil-Achse 4 exakt in Lotrichtung weist, wobei mittels eines Neigungssensors (nicht dargestellt) die Neigung überwacht wird. Die drehbare Lagerung des Aufnahmeteils 3 erfolgt über eine Aufnahmeteil-Lagereinheit 27, die als ein Luftlager ausgebildet ist. Ein Aufnahmeteil-Verdrehwinkel zwischen dem Aufnahmeteil 3 und dem Sockel 2 um die Aufnahmeteil-Achse 4 ist mittels eines ersten Winkel-Encoders (nicht dargestellt) hochpräzise messbar. Ein Prüfling 1 in Form eines Theodoliten mit einer optischen Zieleinheit 18 in Form eines Fernrohrs, das um eine Stehachse 20 elektromotorisch drehbar und um eine Kippachse 21 elektromotorisch kippbar ist, wird mit seinem Prüflings-Unterteil 19 auf dem Aufnahmeteil 3 mittels eines Schnellverschlusses 26 fixiert, wobei die Stehachse 20 des Prüflings 1 mit der Aufnahmeteil-Achse 4 zusammenfällt. Auf dem Sockel 2 ist ausserdem ein Messteil 5 in Form eines Messbügels drehbar angeordnet, das eine U-Form aufweist und die Aufnahmeteil-Achse 4 in der dargestellten Ausgangsstellung zangenartig umgreift. Dieses Messteil 5 wird axial und radial von einer als Luftlager ausgebildeten Messteil-Lagereinheit 6 gelagert. Das Messteil 5 ist gegenüber dem Sockel 2 um eine Messteil-Achse 7 hochpräzise motorisch drehbar, wobei ein Messteil-Verdrehwinkel um die Messteil-Achse 7 zwischen dem Messteil 5 und dem Sockel 2 mittels eines zweiten Winkel-Encoders (nicht dargestellt) hochpräzise messbar ist. Die Messteil-Achse 7 und die Kippachse 21 liegen in einer gemeinsamen Ebene, die von der Aufnahmeteil-Achse 4 und der Stehachse 20 senkrecht durchstossen wird, wobei dieser Durchstosspunkt den Schnittpunkt zwischen der Messteil-Achse 7 und der Kippachse 21 des Prüflings 1 bildet. Abhängig von der Ausrichtung des Prüflings 1 gegenüber dem Aufnahmeteil 4 können die Messteil-Achse 7 und die Kippachse 21 aufeinander liegen, was in der in Fig. 3 gezeigten Darstellung der Fall ist. Somit ist es möglich, die Zieleinheit 18 und das Messteil 5 um eine gemeinsame Achse zu schwenken. Bei der Messteil-Lagereinheit 6 handelt es sich um ein hochpräzises Luftlager, das ein leichtgängiges jedoch stabiles Schwenken des Messteils 5 um die Messteil-Achse 7 unter Einhaltung kleinster Toleranzen ermöglicht. Da die Messteil-Lagereinheit 6 auf einer einzigen Seite einer von der Messteil-Achse 7 senkrecht durchstossenen Messebene 11, in der die Aufnahmeteil-Achse 4 liegt, am Sockel 2 angeordnet ist, ist es möglich, die Messteil-Lagereinheit 6 exakt zu justieren, ohne dass es aufgrund statischer Überbestimmtheit zu Verspannungen mit einer Lagereinheit auf der anderen Seite der Messebene 11 kommt. In Fig. 3 ist ein kleiner Ausschnitt der Messebene 11 symbolisch dargestellt. Durch dies im Wesentlichen zur Messteil-Achse 7 achssymmetrische Gestaltung des Messteils 5 liegt der Schwerpunkt des Messteils 5 nach der Messteil-Achse 7. Hierdurch werden Biege- und Torsionsbelastungen weitgehend vermieden und der Antrieb des Messteils 5 entlastet, so dass Toleranzen gering gehalten und sehr hohe Messgenauigkeiten erzielbar sind. Auf dem Messteil 5 befindet sich eine Optikeinheit 8 mit einem optischen Detektor (in Fig. 3 nicht dargestellt, siehe unten), wobei die Optikeinheit 8 so auf dem Messteil 5 angeordnet ist, dass ein aus Richtung des Prüflings 1 kommendes Prüflings-Strahlenbündels (in Fig. 3 nicht dargestellt, siehe unten) von dem Detektor empfangbar ist, welches Prüflings-Strahlenbündel im Wesentlichen in der von der Messteil-Achse 7 senkrecht durchstossenen Messebene 11, in der die Aufnahmeteil-Achse 4 liegt, verläuft. In Fig. 3 wird das Prüflings-Strahlenbündel von einer in der Zieleinheit 18 angeordneten, beleuchteten Strichplatte (in Fig. 3 nicht dargestellt) hervorgerufen. In diesem Fall handelt es sich bei der Strichplatte um die Referenzstruktur, deren Winkelausrichtung zu prüfen ist. Die beleuchtetet Strichplatte wird hierbei über ein Objektiv 16 der Zieleinheit 18 auf den Detektor der Optikeinheit 8 abgebildet und erzeugt somit eine Vielzahl von Punkten auf dem Detektor. Die Lage dieser Abbildung auf dem Detektor ändert sich bei geringfügiger Verdrehung des Aufnahmeteils 3 um die Aufnahmeteil-Achse 4 und des Prüflings 1 um die Stehachse 20 bzw. des Messteils 5 um die Messteil-Achse 7 und der Zieleinheit 18 um die Kippachse 21. Somit ist es möglich, bei motorischem Verstellen der Vorrichtung und des Prüflings 1 um die jeweiligen Achsen, anschliessendem Fein-Ausrichten, gesteuert durch die Lage der Abbildung auf dem Detektor, und Vergleichen der jeweiligen Winkelmesswerte die Winkelprüfung hochpräzise durchzuführen. Eine Steuerungs-Regelungs-Einheit 13 übernimmt hierbei die Auswertung des Detektors der Optikeinheit 8 und das motorische Ausrichten der Optikeinheit 8 gegenüber der Referenzstruktur des Prüfling 1 mittels motorischem Einstellen des Aufnahmeteils 3 und des Messteils 5 in Abhängigkeit von der Lage der Abbildung auf dem Detektor. Ausserdem übernimmt die Steuerungs-Regelungs-Einheit 13 die Ansteuerung der elektromotorischen Ausrichtung der Zieleinheit 18 des Prüflings 1 und die Erfassung und Auswertung der Winkelmesswerte der Vorrichtung und des Prüflings 1, wobei die Kommunikation mit dem Prüfling 1 über ein im Aufnahmeteil 3 angeordnetes Schleifringsystem (nicht dargestellt) oder per Funkverbindung über Bluetooth erfolgt. Wie in Fig. 3 erkennbar, ist es bei dem dargestellten Ausführungsbeispiel nicht möglich, das Messteil 5 derart zu verstellen, dass die Optikeinheit 8 nahe dem Zenit positioniert wird. Auch ein Verstellen des Messteils 5 über den Zenit hinaus ist nicht möglich, da derjenige der Optikeinheit 8 gegenüberliegende Teil des Messteils 5 mit der Horizontalmesseinheit 25 kollidieren würde, weshalb zum Kalibrieren des gegenüberliegenden Winkelbereichs ein Durchschlagen der Zieleinheit 18 des Prüflings 1 oder eine Horizontalwinkelverstellung notwendig ist. Diese Einschränkung ist jedoch in der Praxis meist nicht von Nachteil. Da ein exakt stehachsfluchtendes Positionieren des Prüflings 1 auf der Horizontalmesseinheit 25 nicht möglich ist, würde eine Messung nahe dem Zenit zu Fehlresultaten führen, wie oben in der Beschreibung der bekannten Theodolitenprüfmaschine beschrieben. Ausserdem ist es einem Benutzer ohnehin in der Regel nicht möglich, zenitnahe Messungen durchzuführen, da das Okular der Zieleinheit 18 in diesem Bereich unzugänglich ist. Weiter unten werden jedoch Ausführungsbeispiele dargestellt, bei denen auch eine zenitnahe Messung durchführbar ist.

Fig. 4 zeigt eine vereinfachte Ausschnittsdarstellung einer ersten alternativen Ausführungsform der Vorrichtung von Fig. 3. Wie in Fig. 3 weist die Vorrichtung zum Prüfen eines Prüflings 1 einen mehrteiligen Sockel 2 mit einer Messteil-Lagereinheit 6 und einer Horizontalmesseinheit 25, die eine Aufnahmeteil-Lagereinheit 27 und ein um die Aufnahmeteil-Achse 4 drehbares Aufnahmeteil 3 umfasst, auf. Das auf einer einzigen Seite der Messebene 11 durch die als Luftlager ausgebildete Messteil-Lagereinheit 6 gelagerte Messteil ist als eine Messwippe 5a ausgebildet, die rechtwinklig zueinander angeordnete Schenkeln 5a', 5a" besitzt. Auf einem dieser Schenkel 5a', 5a" ist die Optikeinheit 8 angeordnet. Die Vorrichtung weist ausserdem einen Handhabungsroboter 22 auf, der einen Robotersockel 29 und einen elektromotorisch um die Messteil-Achse 7 schwenkbaren Greifer 28 umfasst. Zwischen dem Greifen 28 und der Zieleinheit 18 des Prüflings 1, insbesondere dem Objektiv 16, ist eine mechanische Verbindung herstellbar, so dass die Zieleinheit 18 mittels des Handhabungsroboters 22 geschwenkt werden kann. Somit ist es möglich, einen Prüfling, der keine elektromotorische Verstellung seiner Zieleinheit besitzt, insbesondere einen mechanisch verstellbaren Theodolit, mit der Vorrichtung zu prüfen, da die Ausrichtung des Prüflings 1 von dem Handhabungsroboter 22 übernommen wird. Durch eine variable Geometrie des Greifers 28 können Prüflinge unterschiedlicher Geometrien geprüft werden.

In Fig. 5 wird eine zweite alternative Ausführungsform der Vorrichtung von Fig. 3 vereinfacht in einem Ausschnitt dargestellt. Das Messteil ist als eine Messwippe 5b ausgebildet, wobei ein wesentlicher Teil dieser Messwippe 5b achssymmetrisch bezüglich der Messteil-Achse 7 ist. Neben dem Sockel 2, der auf einer einzigen Seite der Messebene 11 angeordneten, als ein Luftlager ausgebildeten Messteil-Lagereinheit 6, der Horizontalmesseinheit 25, welche die Aufnahmeteil-Lagereinheit 27 und das um die Aufnahmeteil-Achse 4 drehbare Aufnahmeteil 3 umfasst, und dem Handhabungsroboter 22 mit dem Robotersockel 29 wird der Prüfling 1 mit der optischen Zieleinheit 18 einschliesslich einem Okular 23 gezeigt. Auf der Messwippe 5b ist ausser der Optikeinheit 8 auf derjenigen, der Optikeinheit 8 bezüglich der Messteil-Achse 7 gegenüberliegenden Seite eine Zusatzoptikeinheit 15 angeordnet. Diese Zusatzoptikeinheit 15 ist als ein Zusatz-Emitter ausgebildet, der eine Strahlung 30 erzeugt, die eine Strichplatte (nicht dargestellt) in der Zieleinheit 18 seitens des Okulars 23 beleuchtet. Durch die Strichplatte wird die Strahlung 30 durch Abblendung bezüglich eines Strahlungsparameters verändert, wobei diese veränderte Strahlung das Prüflings-Strahlenbündel 10 bildet, das über das Objektiv 16 die Zieleinheit 18 verlässt, von der Optikeinheit 8 erfasst wird und mindestens einen Punkt auf dem Detektor (in Fig. 5 nicht dargestellt) erzeugt. Alternativ ist es möglich, die Zusatzoptikeinheit 15 als einen Zusatz-Spiegel auszubilden. In diesem Fall wird die Strahlung beispielsweise von der Optikeinheit 8 ausgesendet, von dem Zusatz-Spiegel reflektiert, von der Strichplatte bezüglich eines Strahlungsparameters verändert, wobei dieser Veränderung entweder vor, nach oder vor und nach der Reflexion am Zusatz-Spiegel erfolgt, und trifft anschliessend auf den Detektor. Weiters ist es möglich, dass die Zusatzoptikeinheit 15 eine, eine Strukturierung - beispielsweise ein Muster - aufweisende Strahlung 30 aussendet. Durch insbesondere mittels Bildverarbeitung erfolgendem Vergleich der Strukturierung der ausgesendeten Strahlung 30 und des empfangenen Prüflings-Strahlenbündels 10 können Fehler in der Optik der Zieleinheit 18, insbesondere Linsenfehler, Verzerrungen, Verzeichnungen, Fokussierungsfehler in Tubusverlauf, etc., erfasst werden.

In Fig. 6 ist eine vereinfachte Ausschnittsdarstellung einer dritten alternativen Ausführungsform der Vorrichtung mit einem als Messrad 5c ausgebildeten Messteil dargestellt. Das Messrad 5c wird von der auf einer einzigen Seite der Messebene 11 angeordneten und als Luftlager ausgebildeten Messteil-Lagereinheit 6 um die Messteil-Achse 7 drehbar gelagert. Wie in den obigen Aufbauten weist die Vorrichtung eine Horizontalmesseinheit 25 mit einer Aufnahmeteil-Lagereinheit 27 zum - um die Aufnahmeteil-Achse 4 drehbaren - Lagern des Aufnahmeteils 3 auf. Weiters sind der auf dem Aufnahmeteil 3 positionierte Prüfling 1 mit seiner Zieleinheit 18 und dem Objektiv 16, und der Handhabungsroboter 22 mit dem Robotersockel 29 zu sehen. Aufgrund der Geometrie des Messrades 5c weist die Vorrichtung hingegen einen Sockel 2a auf, der so ausgebildet ist, dass das Messrad 5c den Prüfling 1 und die Horizontalmesseinheit 25 umschliesst. Auf dem Messrad 5c sind sowohl die Optikeinheit 8, als auch auf der gegenüberliegenden Seite die Zusatzoptikeinheit 15 angeordnet. Die rotationssymmetrische Form des Messrades 5c hat den vorteil, dass elastische Verformungen, die sich in Abhängigkeit von der Lage der Optikeinheit 8 und der Zusatzoptikeinheit 15 ergeben, weitgehend vermeiden lassen. In dieser Ausführungsform sind zenitnahe Messungen - insbesondere bei Verzicht auf die Zusatzoptikeinheit 15 - durchführbar, da das Messrad - bei entsprechender Positionierung der Optikeinheit 8 - im Wesentlichen frei rotierbar ist.

Während sich in den vorangegangenen beispielhaften Ausführungsformen die Messteil-Lagereinheit auf einer einzigen Seite der Messebene 11 befindet, zeigt Fig. 7 eine Ausführungsform, in der die Messteil-Lagereinheit innerhalb der Messebene 11 angeordnet ist. Die auf einem Sockel 2b fixierte Horizontalmesseinheit 25 mit einer Aufnahmeteil-Lagereinheit 27 zum drehbaren Lagern des Aufnahmeteils 3 um die Aufnahmeteil-Achse 4 entspricht den vorangegangenen Beschreibungen. Der auf dem Aufnahmeteil 3 positionierte Prüfling 1 mit seiner Zieleinheit 18, dem Okular 23 und dem Objektiv 16 besitzt eine beleuchtete Strichplatte (in Fig. 7 nicht dargestellt), deren ausgesandte Strahlung nach Formung durch das Objektiv 16 das Prüflings-Strahlenbündel 10 bildet. Der Prüfling 1 und die Horizontalmesseinheit 25 wird von einem ringförmigen, als Messring 5d ausgebildeten Messteil umschlossen. Der in seiner Grundform rotationssymmetrische Messring 5d ist um die Messteil-Achse 7 drehbar gelagert, wobei die Lagerung über eine als Luftlager ausgebildete Messteil-Lagereinheit 6a erfolgt, die auf und teilweise in dem mehrteiligen Sockel 2b angeordnet ist. Die Aussenfläche und gegebenenfalls auch die Innenfläche des Messrings 5d stellen hierbei Lagerflächen des Luftlagers dar. Eine auf dem Messring 5d montierte Optikeinheit 8 mit einem optischen Detektor (in Fig. 7 nicht dargestellt) dient, wie bereits oben beschrieben, zum Empfangen des Prüflings-Strahlenbündels 10, durch welches die Strichplatte auf den Detektor der Optikeinheit 8 abgebildet wird und dort somit eine Vielzahl von Punkten erzeugt. Es ist möglich, vergleichbar mit Fig. 5 und Fig. 6, den Messring 5d ebenfalls mit einer Zusatzoptikeinheit 15, insbesondere einem Zusatz-Emitter oder einem Zusatz-Spiegel, auszustatten. Da die Messteil-Lagereinheit 6a mittig angeordnet ist und sich in der Messebene 11, unterhalb des Prüflings 1 und unterhalb der Horizontalmesseinheit 25 befindet, ist der Prüfling 1 von beiden Seiten leicht zugänglich, was vor allem bei der Montage des Prüflings 1 und Kalibrierarbeiten am Prüfling 1 vorteilhaft ist. Durch die rotationssymmetrische Grundform des Messrings 5d und die nahe oder im Lot des Schwerpunkts des Messrings 5d befindliche Messteil-Lagereinheit 6a werden Biege- und Torsionsmomente am Messteil weitgehend vermieden, so dass höchste Messgenauigkeiten erreichbar sind.

Fig. 8 zeigt den Strahlengang einer möglichen Ausführungsform, bei welcher die Optikeinheit den Aufbau eines bekannten Autokollimators aufweist und die Referenzstruktur des Prüflings von einer ebenen Reflexionsfläche gebildet wird. Die als Autokollimator ausgebildete Optikeinheit 8a umfasst einen Emitter 31a, eine Optikeinheit-Marke 32 in Form einer Strichplatte, einen Teilerwürfel 33 zur physikalischen Strahlteilung, ein Optikeinheit-Objektiv 34a und einen optischen Detektor 9. Die Optikeinheit 8a sendet eine Strahlung in Form eines kollimierten Sende-Strahlungsbündels 35a aus, das von einer ebenen, die Referenzstruktur bildenden Reflexionsfläche 36 am Prüfling 1 reflektiert wird. Dieses reflektierte und somit bezüglich eines Strahlungsparameters veränderte Strahlungsbündel bildet das Prüflings-Strahlenbündel 10a, das somit ebenfalls kollimiert ist. Das Prüflings-Strahlenbündel 10a wird, sofern das kollimierte Sende-Strahlungsbündels 35a im Wesentlichen senkrecht auf die ebenen Reflexionsfläche 36 auftrifft, vom Optikeinheit-Objektiv 34a erfasst und auf den Detektor 9 fokussiert, auf welchem somit die Optikeinheit-Marke 32 abgebildet wird und mindestens einen Punkt 12 bzw. eine Schar solcher Punkte 12 auf dem Detektor 9 erzeugt. Die Lage dieser Abbildung und dieser Schar von Punkten 12 ist abhängig von der Winkelausrichtung der Optikeinheit 8a gegenüber der ebenen Reflexionsfläche 36 bzw. der Referenzstruktur des Prüflings 1. Diese ebene Reflexionsfläche 36 kann einerseits - wie aus dem Stand der Technik bekannt - von einem Aufsatzspiegel 108, 142 (siehe Fig. 1 und 2) auf dem Prüfling gebildet werden, oder direkt von einer ebenen Reflexionsfläche als Referenzstruktur am Prüfling 1. Es ist hiermit möglich, auch einen polygonalen Spiegel, beispielsweise einen für das Rosettenverfahren einzusetzenden Referenzspiegel, bezüglich der Ausrichtung seiner Spiegelflächen zu untersuchen.

Die bezüglich der Winkelausrichtung zu untersuchende Referenzstruktur zahlreicher Prüflinge wird jedoch oft nicht - wie oben - von einer ebenen Fläche gebildet, sondern von einer gewölbten Struktur, beispielsweise einer innerhalb des Objektivs 16 der Zieleinheit 18 befindlichen Linse. In Fig. 9 wird die Optikeinheit 8a - wie auch in Fig. 8 - dargestellt. Vor dem Optikeinheit-Objektiv 34a ist jedoch eine zusätzliche in ihrer Position veränderbare Vorsatzlinse 37a in Form einer Zerstreuungslinse angeordnet, so dass das Sende-Strahlungsbündel 35b divergiert. Das divergierende Sende-Strahlungsbündel 35b trifft auf eine erste und eine zweite Sammellinse 38a' und 38a" des Objektivs 16 der optischen Zieleinheit 18 des Prüflings 1, wird von diesen Sammellinsen 38a' und 38a " fokussiert, trifft auf die konvexe Linse 39, welche hier die Referenzstruktur des Prüflings 1 bildet, und wird von dieser konvexen Linse 39 reflektiert, wodurch eine Veränderung eines Strahlungsparameters stattfindet. Das reflektierte Strahlungsbündel bildet das Prüflings-Strahlenbündel 10b, welches wie oben beschrieben auf den Detektor 9 der Optikeinheit 8a fokussiert wird. Damit die hauptsächliche Reflexion des Sende-Strahlungsbündels 35b an der konvexen Linse 39 - und nicht an einer vorgeschalteten Linse - erfolgt, ist der Einsatz von optischen Filtern (in Fig. 9 nicht dargestellt), die dem Emitter 31a nachgeschaltet sind, möglich. Die Prüfung der Winkelausrichtung durch die Optikeinheit 8a erfolgt in der oben beschriebenen Weise. Es ist möglich, die erfindungsgemässe Vorrichtung durch einen flexiblen Einsatz der Vorsatzlinse 37a von einer ebenen auf eine konvexe oder gegebenenfalls eine konkave Referenzstruktur umzurüsten, ohne dabei einen wesentlichen Eingriff in die Vorrichtung vorzunehmen. Die Ausgestaltung der Vorsatzlinse hängt insbesondere von der Form der als Referenzstruktur dienenden Linse und dem vorangeschalteten Linsensystem ab.

In einer weiteren Ausführungsform, wie in Fig. 10 gezeigt, wird die Referenzstruktur von einer Strichplatte in der Zieleinheit des Prüflings gebildet. Die Optikeinheit 8b weist einen Emitter 31b, einen Teilerwürfel 33 zur physikalischen Strahlteilung, ein Optikeinheit-Objektiv 34b und einen optischen Detektor 9 auf. Die Optikeinheit 8b sendet eine Strahlung in Form eines Sende-Strahlungsbündels 35c aus, das von dem Objektiv 16 der Zieleinheit 18 des Prüflings 1 erfasst wird, auf die Strichplatte 14 der Zieleinheit 18 trifft und diese Strichplatte 14 beleuchtet. Die Strichplatte 14 befindet sich im Brennpunkt des Objektivs 16 der Zieleinheit 18. Die durch diese Beleuchtung der Strichplatte 14 hervorgerufene Reflexion bildet ein Strahlungsbündel, das nach Kollimierung durch nämliches Objektiv 16 das Prüflings-Strahlenbündel 10c darstellt. Dieses Prüflings-Strahlenbündel 10c wird vom Optikeinheit-Objektiv 34b auf den Detektor 9 fokussiert, auf welchem somit die Strichplatte 14 der Zieleinheit 18 des Prüflings 1 abgebildet wird und dort eine Schar von Punkten 12 erzeugt. Die Lage dieser Abbildung bzw. der Schar dieser Punkte 12 auf dem Detektor 9 ist abhängig von der Winkelausrichtung der Zieleinheit 18 bzw. der Strichplatte 14 als Referenzstruktur des Prüflings 1 gegenüber der Optikeinheit 8b der Vorrichtung. Alternativ ist es beispielsweise möglich, die Strichplatte 14 nicht über das Objektiv 16 mittels eines Emitters 31b innerhalb der Optikeinheit 8b zu beleuchten, sondern die Beleuchtung auf der anderen Seite der Strichplatte seitens des Okulars 23 (siehe Fig. 5 und Fig. 7) der Zieleinheit 18, beispielsweise über eine Zusatzoptikeinheit 15 (siehe Fig. 5 und 6) in Form eines Zusatz-Emitters, durchzuführen. Bei einer selbstleuchtenden Strichplatte oder einer durch eine Beleuchtung innerhalb der Zieleinheit 18 beleuchteten Strichplatte kann gänzlich auf einen externen Emitter verzichtet werden. Ferner sind weitere Beleuchtungsmöglichkeiten der Strichplatte 14 möglich, wobei unter Beleuchtung ebenfalls die Bestrahlung mit einer nicht sichtbaren Strahlung zu verstehen ist. Anstelle der Strichplatte 14 kann auch die Oberfläche eines Teilerwürfels der Zieleinheit, einer Bildaufnahmefläche oder einer Distanzmessungs-Laserdiode als Reflexionsfläche dienen.

Soll eine Struktur oder ein Objekt, beispielsweise eine Strichplatte oder eine Blende, innerhalb der Zieleinheit 18 untersucht werden, kann dies in der in Fig. 11 beschriebenen Weise geschehen. Die Optikeinheit 8c weist einen Emitter 31c, einen Teilerwürfel 33 zur physikalischen Strahlteilung, ein Optikeinheit-Objektiv 34c und einen optischen Detektor 9 auf. Eine Strahlung in Form eines Sende-Strahlungsbündels 35d wird von der Vorsatzlinse 37b gestreut und beleuchtet eine Struktur 40 innerhalb der optischen Zieleinheit 18 des Prüflings 1. Diese beleuchtete Struktur 40 wird über die Sammellinsen 38b' und 38b", die Vorsatzlinse 37b und das Optikeinheit-Objektiv 34c auf den Detektor 9 mittels dem Strahlenbündel 10d abgebildet und kann somit graphisch dargestellt und geprüft werden. Diese Struktur wird beispielsweise von einer Bildaufnahmefläche, beispielsweise einem CCD-Chip, oder einer Laserdiode eines Entfernungsmessers gebildet. Andere Beleuchtungsvarianten, wie oben bereits beschrieben, sind auch hier realisierbar.

Es ist möglich, die in Fig. 8 bis 11 beschriebenen Prüfverfahren mit einer einzigen Optikeinheit, gegebenenfalls unter Verwendung von unterschiedlichen Objektiven oder Vorsatzlinsen, durchzuführen und hierdurch eine einzige Vorrichtung ohne aufwendiges Umrüsten für unterschiedliche Prüflinge oder Prüfverfahren zu verwenden.

## Patentansprüche

1. Vorrichtung zum Prüfen oder Kalibrieren der winkelabhängigen Ausrichtung einer Referenzstruktur eines hochpräzisen Prüflings (1), mit
• einem Sockel (2, 2a, 2b),
• einem Aufnahmeteil (3) zur Aufnahme des Prüflings (1), wobei das Aufnahmeteil (3) gegenüber dem Sockel (2, 2a, 2b) um eine Aufnahmeteil-Achse (4) drehbar gelagert ist und ein Aufnahmeteil-Verdrehwinkel um die Aufnahmeteil-Achse (4) zwischen dem Sockel (2, 2a, 2b) und dem Aufnahmeteil (3) messbar ist,
• einem Messteil (5, 5a, 5b, 5c, 5d) mit einer Messteil-Lagereinheit (6, 6a) zur drehbaren Lagerung des Messteils (5, 5a, 5b, 5c, 5d) gegenüber dem Sockel (2, 2a, 2b) um eine die Aufnahmeteil-Achse (4) rechtwinklig schneidende Messteil-Achse (7), wobei ein Messteil-Verdrehwinkel um die Messteil-Achse (7) zwischen dem Sockel (2, 2a, 2b) und dem Messteil (5, 5a, 5b, 5c, 5d) messbar ist,
• einer auf dem Messteil (5, 5a, 5b, 5c, 5d) derart angeordneten Optikeinheit (8, 8a, 8b, 8c) mit einem optischen Detektor (9), dass mindestens ein mit der Referenzstruktur des Prüflings (1) in Wechselwirkung stehendes Prüflings-Strahlenbündel (10, 10a, 10b, 10c, 10d) detektierbar ist, das im Wesentlichen in einer von der Messteil-Achse (7) senkrecht durchstossenen Messebene (11), in der die Aufnahmeteil-Achse (4) liegt und die von einem Teil des Messteils (5, 5a, 5b, 5c, 5d) geschnitten wird, verläuft und auf dem Detektor (9) mindestens einen Punkt (12) erzeugt, und
• einer Steuerungs-Regelungs-Einheit (13), die derart ausgebildet und verschaltet ist, dass die Optikeinheit (8, 8a, 8b, 8c) gegenüber der Referenzstruktur des Prüflings (1) mittels motorischem Einstellen des Aufnahmeteils (3) und des Messteils (5, 5a, 5b, 5c, 5d) in Abhängigkeit von der Lage des mindestens einen Punktes (12) auf dem Detektor (9) automatisch motorisch ausrichtbar ist und der Aufnahmeteil-Verdrehwinkel und der Messteil-Verdrehwinkel automatisch erfassbar sind,
**dadurch gekennzeichnet, dass**
• die Messteil-Lagereinheit (6, 6a) auf einer einzigen Seite der Messebene (11) oder in der Messebene (11) angeordnet ist, und
• das Messteil (5, 5a, 5b, 5c, 5d) eine den Schnittpunkt der Messteil-Achse (7) mit der Aufnahmeteil-Achse (4) auf der Messebene (11) und somit den Prüfling (1) umgreifende oder umschliessende, in einem wesentlichen Teil zur Messteil-Achse (7) achssymmetrische Grundform aufweist.

2. Vorrichtung nach Anspruch 1, **dadurch gekennzeichnet, dass** ein wesentlicher Teil des Messteils spiegelsymmetrisch bezüglich einer Ebene, in der die Messteil-Achse (7) liegt, in Form einer Messwippe (5, 5a, 5b) ausgebildet ist.

3. Vorrichtung nach Anspruch 1, **dadurch gekennzeichnet, dass** ein wesentlicher Teil des Messteils rotationssymmetrisch bezüglich der Messteil-Achse (7) ausgebildet ist und insbesondere die Form eines Messrades (5c), Messringes (5d) oder einer Scheibe aufweist.

4. Vorrichtung nach einem der Ansprüche 1 bis 3, **dadurch gekennzeichnet, dass** das Messteil (5, 5a, 5b, 5c, 5d) mindestens zweiteilig ausgebildet ist, wobei
• auf einem ersten Teilelement des Messteils (5, 5a, 5b, 5c, 5d) die Optikeinheit (8, 8a, 8b, 8c) und
• auf einem zweiten Teilelement des Messteils (5, 5a, 5b, 5c, 5d) ein optisches Umlenkelement - insbesondere eine Spiegelungseinheit oder ein Lichtleiter - jeweils derart angeordnet sind, dass das Prüflings-Strahlenbündel (10, 10a, 10b, 10c, 10d) zur Optikeinheit (8, 8a, 8b, 8c) umlenkbar oder leitbar ist.

5. Vorrichtung nach einem der Ansprüche 1 bis 4, **dadurch gekennzeichnet, dass**
• die Optikeinheit als ein Autokollimator (8, 8a) zur Richtungsprüfung mit
• einem Emitter (31a) zum Erzeugen einer Strahlung,
• dem Detektor (9) und
• einem Optikeinheit-Objektiv (34a) zum Formen der Strahlung in ein Sende-Strahlungsbündel (35a, 35b) und zum Fokussieren des Prüflings-Strahlenbündels (10, 10a, 10b) auf den Detektor (9)
ausgebildet ist, und
• die Referenzstruktur des Prüflings (1) oder ein mit der Referenzstruktur verbundenes und in Wechselwirkung stehendes Teil eine Reflexionsfläche (36, 39) zur Reflexion des Sende-Strahlungsbündels (35a, 35b) aufweist, wobei das reflektierte Sende-Strahlungsbündel das Prüflings-Strahlenbündel (10, 10a, 10b) bildet.

6. Vorrichtung nach Anspruch 5, **dadurch gekennzeichnet, dass**
• der Autokollimator (8, 8a) eine Vorsatz-Linseneinheit (37a) zum variablen Formen des Sende-Strahlungsbündels (35b) und des Prüflings-Strahlenbündels (10, 10b) aufweist und
• die Reflexionsfläche von einer konvexen oder konkaven Oberfläche eines die Referenzstruktur bildenden Teils - insbesondere einer Linse (39) eines Objektivs (16) - des Prüflings (1) gebildet wird.

7. Vorrichtung nach einem der Ansprüche 1 bis 4, **dadurch gekennzeichnet, dass**
• die Optikeinheit (8, 8a, 8b, 8c) als eine Kamera und der optische Detektor (9) als ein lichtempfindlicher Bildsensor zur Aufnahme eines Bildes ausgebildet ist und
• die Steuerungs-Regelungs-Einheit (13) derart ausgebildet und verschaltet ist, dass das motorische Ausrichten der Optikeinheit (8, 8a, 8b, 8c) gegenüber der Referenzstruktur des Prüfling (1) in Abhängigkeit von dem Ergebnis einer Verarbeitung des aufgenommenen Bildes der Optikeinheit (8, 8a, 8b, 8c) erfolgt.

8. Vorrichtung nach einem der Ansprüche 1 bis 7, **dadurch gekennzeichnet, dass** auf derjenigen, der Optikeinheit (8, 8a, 8b, 8c) bezüglich der Messteil-Achse (7) gegenüberliegenden Seite auf dem Messteil (5, 5a, 5b, 5c, 5d) eine Zusatzoptikeinheit (15) - insbesondere mit einem Zusatz-Emitter oder einem Zusatz-Spiegel oder eine Zusatz-Kamera - angeordnet ist.

9. Vorrichtung nach Anspruch 8, **dadurch gekennzeichnet, dass**
• die Zusatzoptikeinheit (15) als ein Autokollimator zur Richtungsprüfung - insbesondere in Bezug auf eine Okular des Prüflings (1) - ausgebildet ist und
• die Steuerungs-Regelungs-Einheit (13) derart ausgebildet und verschaltet ist, dass das motorische Ausrichten der Optikeinheit (8, 8a, 8b, 8c) gegenüber der Referenzstruktur des Prüfling (1) in Abhängigkeit von dem Ergebnis der Richtungsprüfung durch die als Autokollimator ausgebildete Zusatzoptikeinheit (15) erfolgt.

10. Vorrichtung nach Anspruch 8, **dadurch gekennzeichnet, dass**
• die Zusatzoptikeinheit (15) als eine Kamera zur Aufnahme eines Bildes ausgebildet ist und
• die Steuerungs-Regelungs-Einheit (13) derart ausgebildet und verschaltet ist, dass das motorische Ausrichten der Optikeinheit (8, 8a, 8b, 8c) gegenüber der Referenzstruktur des Prüfling (1) in Abhängigkeit von dem Ergebnis einer Verarbeitung des aufgenommenen Bildes der Zusatzoptikeinheit (15) erfolgt.

11. Vorrichtung nach einem der Ansprüche 1 bis 10, **dadurch gekennzeichnet, dass**
• die Vorrichtung als eine Prüfmaschine zur Prüfung eines geodätischen Messinstruments - insbesondere eines Theodoliten, eines Nivelliers oder eines geodätischen Scanners - mit einer, eine Zielachse definierenden, um eine Stehachse (20) drehbaren und gegebenenfalls um eine Kippachse (21) schwenkbaren optischen Zieleinheit (18) ausgebildet ist,
• das Aufnahmeteil (3) so ausgebildet ist, dass ein Prüflings-Unterteil (19) auf dem Aufnahmeteil (3) fixierbar ist, wobei die Stehachse (20) im Wesentlichen mit der Aufnahmeteil-Achse (4) und gegebenenfalls die Kippachse (21) im Wesentlichen mit der Messteil-Achse (7) zusammenfallen,
• die Vorrichtung so gestaltet ist, dass die optische Zieleinheit (18) und die Optikeinheit (8, 8a, 8b, 8c) um die Aufnahmeteil-Achse (4) und die Messteil-Achse (7) relativ zueinander ausrichtbar sind, wobei die Richtung des Prüflings-Strahlenbündels (10, 10a, 10b, 10c, 10d) und die der Zielachse in einem definierbaren Zusammenhang stehen, und
• die Steuerungs-Regelungs-Einheit (13) derart ausgebildet und verschaltet ist, dass ein gemessener Prüflings-Horizontalwinkel und gegebenenfalls ein Prüflings-Vertikalwinkel erfassbar sind.

12. Vorrichtung nach Anspruch 11, **gekennzeichnet durch** einen von der Steuerungs-Regelungs-Einheit (13) ansteuerbaren Handhabungsroboter (22), der derart angeordnet ist, dass die optischen Zieleinheit (18) des geodätischen Messinstruments mittels des Handhabungsroboters (22) ausrichtbar ist.

13. Vorrichtung nach einem der Ansprüche 1 bis 12,
**gekennzeichnet durch** einen thermischen Strahler, der derart angeordnet ist, dass der Prüfling (1) zumindest von einer Seite zum Ermitteln des thermischen Verhaltens erwärmbar ist.

14. Vorrichtung nach einem der Ansprüche 1 bis 13, **dadurch gekennzeichnet, dass**
• die Vorrichtung Mittel zum Neigen aufweist, die derart angeordnet sind, dass der Prüfling (1) durch Neigen des Sockels (2, 2a, 2b) und/oder des Aufnahmeteils (3) neigbar ist, und
• die Steuerungs-Regelungs-Einheit (13) derart ausgebildet und verschaltet ist, dass Messwerte eines Neigungssensors des Prüflings (1) automatisch erfassbar sind.

## Claims

1. Device for checking or calibrating the angle-dependent alignment of a reference structure of a high-precision test-piece (1), comprising
• a base (2, 2a, 2b),
• a reception part (3) for receiving the test-piece (1), the reception part (3) being mounted in such a way that it can rotate relative to the base (2, 2a, 2b) about a reception part axis (4), and a reception part rotation angle about the reception part axis (4) between the base (2, 2a, 2b) and the reception part (3) being measurable,
• a measurement part (5, 5a, 5b, 5c, 5d) comprising a measurement part bearing unit (6, 6a) for rotatable mounting of the measurement part (5, 5a, 5b, 5c, 5d) relative to the base (2, 2a, 2b) about a measurement part axis (7) intersecting the reception part axis (4) at a right angle, a measurement part rotation angle about the measurement part axis (7) between the base (2, 2a, 2b) and the measurement part (5, 5a, 5b, 5c, 5d) being measurable,
• an optical unit (8, 8a, 8b, 8c) which comprises an optical detector (9) and is arranged on the measurement part (5, 5a, 5b, 5c, 5d) in such a way that it is possible to detect at least one test-piece ray bundle (10, 10a, 10b, 10c, 10d), interacting with the reference structure of the test-piece (1), which essentially extends in a measurement plane (11) in which the reception part axis (4) lies, through which the measurement part axis (7) passes perpendicularly and which is intersected by a part of the measurement part (5, 5a, 5b, 5c, 5d), and generates at least one point (12) on the detector (9), and
• a control/regulation unit (13) which is formed and interconnected in such a way that the optical unit (8, 8a, 8b, 8c) in relation to the reference structure of the test-piece (1) can be automatically aligned in a motorized fashion by means of motorized setting of the reception part (3) and the measurement part (5, 5a, 5b, 5c, 5d) as a function of the position of the at least one point (12) on the detector (9), and the reception part rotation angle and the measurement part rotation angle can be recorded automatically
**characterized in that**
• the measurement part bearing unit (6, 6a) is arranged on a single side of the measurement plane (11) or in the measurement plane (11), and
• the measurement part (5, 5a, 5b, 5c, 5d) has a basic shape which is axially symmetrical in a substantial part with respect to the measurement part axis (7), and encompasses or encloses the point of intersection of the measurement part axis (7) with the reception part axis (4) on the measurement plane (11), and therefore the test-piece (1).

2. Device according to Claim 1, **characterized in that** a substantial part of the measurement part is formed mirror-symmetrically with respect to a plane, in which the measurement part axis (7) lies, in the form of a measurement rocker arm (5, 5a, 5b).

3. Device according to Claim 1, **characterized in that** a substantial part of the measurement part is formed rotationally-symmetrically with respect to the measurement part axis (7), and in particular has the shape of a measurement wheel (5c), measurement ring (5d) or a disk.

4. Device according to one of Claims 1 to 3, **characterized in that** the measurement part (5, 5a, 5b, 5c, 5d) is formed of at least two parts,
• the optical unit (8, 8a, 8b, 8c) being arranged on a first subelement of the measurement part (5, 5a, 5b, 5c, 5d),
• and an optical deviating element - in particular a reflection unit or a light guide - being arranged on a second subelement of the measurement part (5, 5a, 5b, 5c, 5d),
respectively in such a way that the test-piece ray bundle (10, 10a, 10b, 10c, 10d) can be deviated or guided to the optical unit (8, 8a, 8b, 8c).

5. Device according to one of Claims 1 to 4, **characterized in that**
• the optical unit is formed as an autocollimator (8, 8a) for directional checking, comprising
o an emitter (31a) for generating radiation,
o the detector (9) and
o an optical unit objective (34a) for shaping the radiation into a transmission radiation bundle (35a, 35b) and for focusing the test-piece ray bundle (10, 10a, 10b) onto the detector (9), and
• the reference structure of the test-piece (1), or a part connected to and interacting with the reference structure, forms a reflection face (36, 39) for reflection of the transmission ray bundle (35a, 35b), the reflected transmission ray bundle forming the test-piece ray bundle (10, 10a, 10b).

6. Device according to Claim 5, **characterized in that**
• the autocollimator (8, 8a) comprises an auxiliary lens unit (37a) for variable shaping of the transmission radiation bundle (35b) and of the test-piece ray bundle (10, 10b), and
• the reflection face is formed by a convex or concave surface of a part forming the reference structure - in particular a lens (39) of an objective (16) - of the test-piece (1).

7. Device according to one of Claims 1 to 4, **characterized in that**
• the optical unit (8, 8a, 8b, 8c) is formed as a camera and the optical detector (9) is formed as a photosensitive image sensor for recording an image, and
• the control/regulation unit (13) is formed and interconnected in such a way that the motorized alignment of the optical unit (8, 8a, 8b, 8c) relative to the reference structure of the test-piece (1) is carried out as a function of the result of processing of the recorded image of the optical unit (8, 8a, 8b, 8c).

8. Device according to one of Claims 1 to 7, **characterized in that** an additional optical unit (15) - in particular comprising an additional emitter or an additional mirror or an additional camera - is arranged on the measurement part (5, 5a, 5b, 5c, 5d) on the opposite side from the optical unit (8, 8a, 8b, 8c) with respect to the measurement part axis (7).

9. Device according to Claim 8, **characterized in that**
• the additional optical unit (15) is formed as an autocollimator for directional checking - in particular with respect to an eyepiece of the test-piece (1), and
• the control/regulation unit (13) is formed and interconnected in such a way that the motorized alignment of the optical unit (8, 8a, 8b, 8c) relative to the reference structure of the test-piece (1) is carried out as a function of the result of the directional checking by the additional optical unit (15) formed as an autocollimator.

10. Device according to Claim 8, **characterized in that**
• the additional optical unit (15) is formed as a camera for recording an image, and
• the control/regulation unit (13) is formed and interconnected in such a way that the motorized alignment of the optical unit (8, 8a, 8b, 8c) relative to the reference structure of the test-piece (1) is carried out as a function of the result of processing of the recorded image of the additional optical unit (15).

11. Device according to one of Claims 1 to 10, **characterized in that**
• the device is formed as a test machine for checking a geodetic measuring instrument - in particular a theodolite, a leveller or a geodetic scanner - comprising an optical sighting unit (18) which defines a sighting axis and can be rotated about an upright axis (20) and optionally tilted about a tilting axis (21),
• the reception part (3) is formed in such a way that a test-piece lower part (19) can be fixed on the reception part (3), the upright axis (20) essentially coinciding with the reception part axis (4) and optionally the tilting axis (21) essentially coinciding with the measurement part axis (7),
• the device is configured in such a way that the optical sighting unit (18) and the optical unit (8, 8a, 8b, 8c) can be aligned relative to one another about the reception part axis (4) and the measurement part axis (7), the direction of the test-piece ray bundle (10, 10a, 10b, 10c, 10d) and that of the sighting axis being in a definable relationship, and
• the control/regulation unit (13) is formed and interconnected in such a way that a measured test-piece horizontal angle and optionally a test-piece vertical angle can be recorded.

12. Device according to Claim 11, **characterized by** a manipulation robot (22) which can be driven by the control/regulation unit (13) and is arranged in such a way that the optical sighting unit (18) of the geodetic measuring instrument can be aligned by means of the manipulation robot (22).

13. Device according to one of Claims 1 to 12, **characterized, by** a thermal radiator which is arranged in such a way that the test-piece (1) can be heated from at least one side in order to determine the thermal behaviour.

14. Device according to any one of Claims 1 to 13, **characterized in that**
• the device comprises inclination means which are arranged in such a way that the test-piece (1) can be inclined by inclining the base (2, 2a, 2b) and/or the reception part (3), and
• the control/regulation unit (13) is formed and interconnected in such a way that the measurement values of an inclination sensor of the test-piece (1) can be recorded automatically.

## Revendications

1. Dispositif pour vérifier ou étalonner l'alignement dépendant de la position angulaire d'une structure de référence d'une éprouvette de haute précision avec
• un socle (2, 2a, 2b),
• une pièce de logement (3) pour le logement de l'éprouvette (1), la pièce de logement (3) étant positionnée rotative par rapport au socle (2, 2a, 2b) autour d'un axe de la pièce de logement (4) et un angle de torsion de la pièce de logement autour de l'axe de la pièce de logement (4) étant mesurable entre le socle (2, 2a, 2b) et la pièce de logement (3),
• une pièce de mesure (5, 5a, 5b, 5c, 5d) avec une unité d'appui de la pièce de mesure (6, 6a) pour le positionnement rotatif de la pièce de mesure (5, 5a, 5b, 5c, 5d) par rapport au socle (2, 2a, 2b) autour de l'axe de la pièce de mesure (7) qui coupe l'axe de la pièce de logement (4) à angle droit, un angle de torsion de la pièce de mesure autour de l'axe de la pièce de mesure (7) étant mesurable entre le socle (2, 2a, 2b) et la pièce de mesure (5, 5a, 5b, 5c, 5d),
• une unité d'optique (8, 8a, 8b, 8c) placée sur la pièce de mesure (5, 5a, 5b, 5c, 5d) avec un détecteur optique (9) de telle manière qu'au moins un faisceau de rayons de l'éprouvette (10, 10a, 10b, 10c, 10d) qui est en interaction avec la structure de référence de l'éprouvette (1) peut être détecté, faisceau de rayons qui est substantiellement dans un plan de mesure (11), qui est traversé perpendiculairement par l'axe de la pièce de mesure (7), dans lequel se trouve l'axe de la pièce de logement (4) et qui est coupé par une partie de la pièce de mesure (5, 5a, 5b, 5c, 5d) et qui génère au moins un point (12) sur le détecteur (9) et
• une unité de réglage/commande (13) qui est configurée et câblée de telle manière que l'unité d'optique (8, 8a, 8b, 8c) peut être alignée de manière motorisée automatique par rapport à la structure de référence de l'éprouvette (1) au moyen du réglage motorisé de la pièce de logement (3) et de la pièce de mesure (5, 5a, 5b, 5c, 5d) en fonction de la position du point qui existe au moins (12) sur le détecteur (9) et l'angle de torsion de la pièce de logement et l'angle de torsion de la pièce de mesure peuvent être détectés automatiquement
**caractérisé en ce que**
• l'unité d'appui de la pièce de mesure (6, 6a) est placée sur un côté unique du plan de mesure (11) ou dans le plan de mesure (11) et
• la pièce de mesure (5, 5a, 5b, 5c, 5d) présente une forme de base, pour une partie essentielle d'axe symétrique à l'axe de la pièce de mesure (7), qui enveloppe ou entoure le point d'intersection de l'axe de la pièce de mesure (7) avec l'axe de la pièce de logement (4) sur le plan de mesure (11) et donc l'éprouvette (1).

2. Dispositif selon la revendication 1, **caractérisé en ce qu'**une partie essentielle de la pièce de mesure est configurée en forme de bascule de mesure (5, 5a, 5b) en ayant une symétrie miroir par rapport à un plan dans lequel se situe l'axe de la pièce de mesure (7).

3. Dispositif selon la revendication 1, **caractérisé en ce qu'**une partie essentielle de la pièce de mesure est configurée symétrique en rotation par rapport à l'axe de la pièce de mesure (7) et présente en particulier la forme d'une roue de mesure (5c), d'un anneau de mesure (5d) ou d'un disque.

4. Dispositif selon l'une des revendications 1 à 3, **caractérisé en ce que** la pièce de mesure (5, 5a, 5b, 5c, 5d) est configurée au moins en deux parties cependant que
• l'unité d'optique (8, 8a, 8b, 8c) est placée sur un premier élément partiel de la pièce de mesure (5, 5a, 5b, 5c, 5d) et
• un élément de déviation optique - en particulier une unité de réflexion spéculaire ou un guide de lumière - est placé sur un second élément partiel de la pièce de mesure (5, 5a, 5b, 5c, 5d)
respectivement de telle manière que le faisceau de rayons de l'éprouvette (10, 10a, 10b, 10c, 10d) peut être dévié ou guidé vers l'unité d'optique (8, 8a, 8b, 8c).

5. Dispositif selon l'une des revendications 1 à 4, **caractérisé en ce que**
• l'unité d'optique est configurée comme un autocollimateur (8, 8a) pour la vérification du sens avec
• un émetteur (31 a) pour produire un rayonnement,
• le détecteur (9) et
• un objectif d'unité d'optique (34a) pour former le rayonnement en un faisceau de rayons d'émission (35a, 35b) et pour focaliser le faisceau de rayons de l'éprouvette (10, 10a, 10b) sur le détecteur (9) et
• la structure de référence de l'éprouvette (1) ou une partie reliée et qui est en interaction avec la structure de référence présente une surface de réflexion (36, 39) pour la réflexion du faisceau de rayons d'émission (35a, 35b), le faisceau de rayons d'émission réfléchi formant le faisceau de rayons de l'éprouvette (10, 10a, 10b).

6. Dispositif selon la revendication 5, **caractérisé en ce que**
• l'autocollimateur (8, 8a) présente une unité de lentille additionnelle (37a) pour la formation variable du faisceau de rayons d'émission (35b) et du faisceau de rayons de l'éprouvette (10, 10b) et
• la surface de réflexion est formée par une surface convexe ou concave d'une partie qui forme la structure de référence - en particulier d'une lentille (39) d'un objectif (16) - de l'éprouvette (1).

7. Dispositif selon l'une des revendications 1 à 4, **caractérisé en ce que**
• l'unité d'optique (8, 8a, 8b, 8c) est configurée comme une caméra et le détecteur optique (9) comme un capteur d'image sensible à la lumière pour prendre une image et
• l'unité de réglage/commande (13) est configurée et câblée de telle manière que l'alignement motorisé de l'unité d'optique (8, 8a, 8b, 8c) par rapport à la structure de référence de l'éprouvette (1) se fait en fonction du résultat d'un traitement de l'image prise par l'unité d'optique (8, 8a, 8b, 8c).

8. Dispositif selon l'une des revendications 1 à 7, **caractérisé en ce qu'**une unité d'optique additionnelle (15) - en particulier avec un émetteur additionnel ou un miroir additionnel ou une caméra additionnelle - est placée sur la pièce de mesure (5, 5a, 5b, 5c, 5d) sur le côté opposé à l'unité d'optique (8, 8a, 8b, 8c) par rapport à l'axe de la pièce de mesure (7).

9. Dispositif selon la revendication 8, **caractérisé en ce que**
• l'unité d'optique additionnelle (15) est configurée comme un autocollimateur pour la vérification du sens - en particulier par rapport à un oculaire de l'éprouvette (1) - et
• l'unité de réglage/commande (13) est configurée et câblée de telle manière que l'alignement motorisé de l'unité d'optique (8, 8a, 8b, 8c) par rapport à la structure de référence de l'éprouvette (1) se fait en fonction du résultat de la vérification du sens par l'unité d'optique additionnelle (15) configurée comme un autocollimateur.

10. Dispositif selon la revendication 8, **caractérisé en ce que**
• l'unité d'optique additionnelle (15) est configurée comme une caméra pour prendre une image et
• l'unité de réglage/commande (13) est configurée et câblée de telle manière que l'alignement motorisé de l'unité d'optique (8, 8a, 8b, 8c) par rapport à la structure de référence de l'éprouvette (1) se fait en fonction du résultat d'un traitement de l'image prise par l'unité d'optique additionnelle (15).

11. Dispositif selon l'une des revendications 1 à 10, **caractérisé en ce que**
• le dispositif est configuré comme une machine d'essai pour tester un instrument de mesure géodésique - en particulier un théodolite, un niveau ou un scanner de géodésie - avec une unité de collimation optique (18) qui définit un axe de collimation, rotative autour d'un axe vertical (20) et, le cas échéant, pivotante autour d'un axe de renversement (21),
• la pièce de logement (3) est configurée de telle manière qu'une partie inférieure de l'éprouvette (19) peut être fixée sur la pièce de logement (3), l'axe vertical (20) coïncidant substantiellement avec l'axe de la pièce de logement (4) et, le cas échéant, l'axe de renversement (21) coïncidant substantiellement avec l'axe de la pièce de mesure (7),
• le dispositif est configuré tel que l'unité de collimation optique (18) et l'unité d'optique (8, 8a, 8b, 8c) peuvent être alignées l'une par rapport à l'autre autour de l'axe de la pièce de logement (4) et de l'axe de la pièce de mesure (7), le sens du faisceau de rayons de l'éprouvette (10, 10a, 10b, 10c, 10d) et celui de l'axe de collimation étant dans une relation pouvant être définie et
• l'unité de réglage/commande (13) est configurée et câblée de telle manière qu'un angle horizontal mesuré de l'éprouvette et, le cas échéant, un angle vertical de l'éprouvette peuvent être détectés.

12. Dispositif selon la revendication 11, **caractérisé par** un robot de manipulation (22) pouvant être commandé par l'unité de réglage/commande (13) qui est placé de telle manière que l'unité de collimation optique (18) de l'instrument de mesure géodésique peut être alignée au moyen du robot de manipulation (22).

13. Dispositif selon l'une des revendications 1 à 12, **caractérisé par** un radiateur thermique qui est placé de telle manière que l'éprouvette (1) peut être réchauffée au moins par un côté pour déterminer le comportement thermique.

14. Dispositif selon l'une des revendications 1 à 13, **caractérisé en ce que**
• le dispositif présente des moyens pour incliner qui sont placés de telle manière que l'éprouvette (1) peut être inclinée par l'inclinaison du socle (2, 2a, 2b) et/ou de la pièce de logement (3) et
• l'unité de réglage/commande (13) est configurée et câblée de telle manière que des valeurs mesurées d'un détecteur d'inclinaison de l'éprouvette (1) peuvent être détectées automatiquement.
